# EUROPEAN PATENT SPECIFICATION

(11) **EP 4 571 736 B1**
(45) Date of publication and mention of the grant of the patent: **17.06.2026**
(21) Application number: 23865821.5
(22) Date of filing: 12.09.2023
(51) Int. Cl.: G10L 17/22, G10L 17/04, G10L 15/22

(54) **FALSE REJECTION DETERMINATION METHOD AND ELECTRONIC DEVICE FOR PERFORMING SAME**
VERFAHREN ZUR BESTIMMUNG EINER FALSCHEN ABLEHNUNG UND ELEKTRONISCHE VORRICHTUNG ZUR DURCHFÜHRUNG DAVON
PROCÉDÉ DE DÉTERMINATION DE FAUX REJET ET DISPOSITIF ÉLECTRONIQUE POUR SA MISE EN OEUVRE

(30) Priority: 16.09.2022 KR 20220117374; 05.10.2022 KR 20220127291
(43) Date of publication of application: 18.06.2025
(73) Proprietor: Samsung Electronics Co., Ltd., Suwon-si, Gyeonggi-do 16677 (KR)
(72) Inventor: SEO, Hyunson, Suwon-si Gyeonggi-do 16677 (KR); SONG, Gajin, Suwon-si Gyeonggi-do 16677 (KR)
(74) Representative: Nederlandsch Octrooibureau
(86) International application number: PCT/KR2023/013626
(87) International publication number: WO 2024/058524

(56) References cited:
- KR-A- 20160 047 834
- KR-A- 20190 096 618
- KR-A- 20190 096 856
- KR-A- 20190 096 862
- US-A1- 2012 209 609
- US-A1- 2019 377 853
- US-A1- 2021 012 776

## Description

### TECHNICAL FIELD

The disclosure relates to false rejection determination method and electronic device for performing the same.

### BACKGROUND ART

A user may receive various services using an electronic device. With the development of speech recognition technology, a user may input a speech (e.g., an utterance) into an electronic device and receive a response message according to the input speech through a voice assistant (e.g., a voice assistant service).

In addition, the electronic device may perform functions or support another electronic device (e.g., an Internet of Things (IoT) device) to perform functions, based on the voice assistant recognizing the input speech (e.g., a voice call command). Voice call command-based device control may include understanding a user's intent from the voice call command and executing a device command desired by the user.

Document US 2021/012776 Al relates to systems and processes for operating an intelligent automated assistant. An example method includes receiving, from one or more external electronic devices, a plurality of speaker profiles for a plurality of users; receiving a natural language speech input; determining, based on comparing the natural language speech input to the plurality of speaker profiles: a first likelihood that the natural language speech input corresponds to a first user of the plurality of users; and a second likelihood that the natural language speech input corresponds to a second user of the plurality of users; determining whether the first likelihood and the second likelihood are within a first threshold; and in accordance with determining that the first likelihood and the second likelihood are not within the first threshold: providing a response to the natural language speech input, the response being personalized for the first user.

Document US 2019/377853 Al relates to the use of user-behavior-based adaptive authentication which provides more secure user authentication without sacrificing user convenience. A baseline behavior pattern of a user may be identified using a machine learning algorithm based on user behavior data collected by one or more applications on at least one user device of the particular user for a predetermined time period. One or more events that deviate from the baseline behavior pattern of the user during a specific time period are then detected using the machine learning algorithm based on new user behavior data of the user obtained during the specific time period. In response to receiving a request from an application to authenticate a particular user for access or continued access to a resource, an authentication question and a correct answer for the authentication question are generated based on a detail of an event that deviates from the baseline behavior pattern.

### DISCLOSURE OF THE INVENTION

### TECHNICAL SOLUTIONS

The invention provides an electronic device(101; 201; 520; 540; 701; 702; 705) , as set forth in independent claim 1, wherein the device includes: a memory(130; 207) storing instructions; and a processor(120;203) operatively connected to the memory(130; 207) and configured to execute the instructions to: receive a user input; generate a detection event corresponding to a related event that is related to an utterance for which speaker recognition has failed, based on the user input; generate an information on the related event in response to the detection event; output the generated information on the related event; and obtain feedback on the information on the related event, wherein the processor is characterized in that the feedback is used to learn a speaker model for the utterance for which the speaker recognition has failed.

The invention further provides a method of operating an electronic device(101; 201; 520; 540; 701; 702; 705), as set forh in independent claim 15, wherein the method includes: receiving a user input; generating a detection event corresponding to a related event that is related to an utterance for which speaker recognition has failed, based on the user input; outputting information on the related event generated in response to the detection event; and obtaining feedback on the information on the related event, wherein the feedback is used to learn a speaker model for the utterance for which the speaker recognition has failed. Preferred embodiments of the invention are set forth in the dependent claims.

The embodiments referred to herein below in the context of the drawings are illustrative of - but, however, not in in accordance with - the claimed invention.

### BRIEF DESCRIPTION OF DRAWINGS

FIG. 1 is a block diagram illustrating an electronic device in a network environment according to an embodiment;
FIG. 2 is a block diagram illustrating an integrated intelligence system, according to an embodiment.
FIG. 3 is a diagram illustrating a form in which relationship information between concepts and actions is stored in a database, according to an embodiment.
FIG. 4 is a diagram illustrating a screen of an electronic device processing a received voice input through an intelligent app, according to an embodiment.
FIG. 5 is a diagram illustrating an intelligent voice system, according to an embodiment.
FIG. 6 is a flowchart illustrating an operation in which an electronic device obtains feedback to determine a false-rejected utterance, according to an embodiment.
FIG. 7A is a diagram illustrating an operation in which another device determines whether an utterance for which speaker recognition has failed on one device is false-rejected, according to an embodiment;
FIG. 7B is a diagram illustrating an operation in which one device determines whether an utterance for which speaker recognition has failed on the one device is false-rejected, according to an embodiment.
FIG. 8 is a diagram illustrating an operation in which an electronic device classifies an utterance for which speaker recognition has failed, according to an embodiment.
FIG. 9 is a diagram illustrating an example of an operation in which an intelligent server updates a speaker model of an utterance for which speaker recognition has failed based on a false-rejected utterance, according to an embodiment.
FIG. 10 is a diagram illustrating another example of an operation in which an intelligent server updates a speaker model of an utterance for which speaker recognition has failed based on a false-rejected utterance, according to an embodiment.
FIG. 11 is a flowchart illustrating an operation in which an intelligent server updates a speaker model of a false-rejected utterance based on the false-rejected utterance, according to an embodiment.
FIG. 12A is an example of a user interface for obtaining feedback, according to an embodiment.
FIG. 12B is an example of a user interface for obtaining feedback, according to an embodiment.
FIG. 12C is an example of a user interface for obtaining feedback, according to an embodiment.

### BEST MODE FOR CARRYING OUT THE INVENTION

Hereinafter, certain example embodiments will be described in detail with reference to the accompanying drawings. When describing the embodiments with reference to the accompanying drawings, like reference numerals refer to like elements and a repeated description related thereto will be omitted.

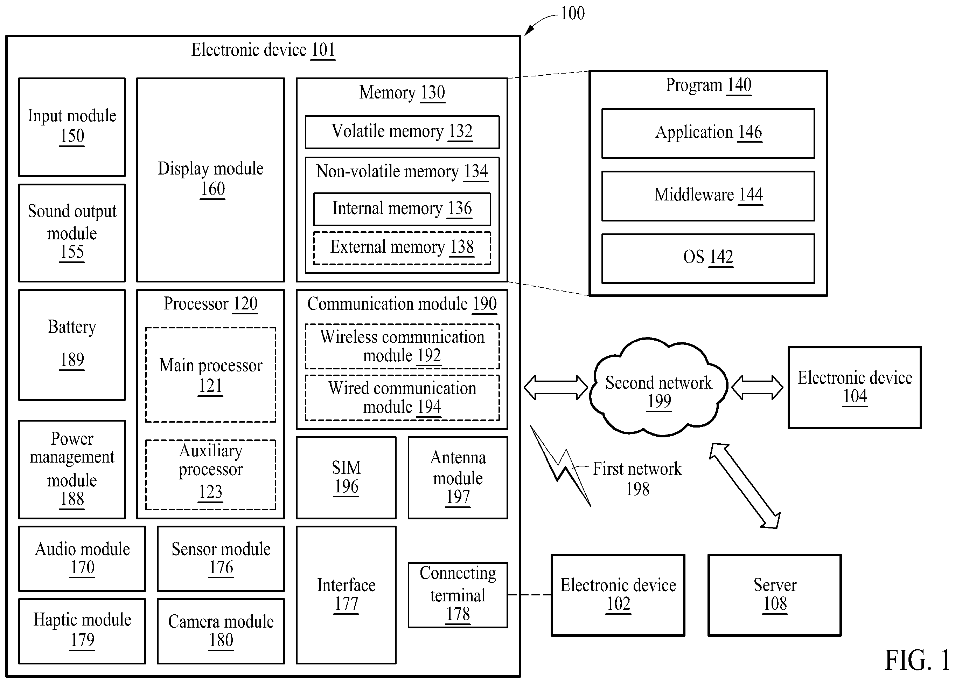

FIG. 1 is, a block diagram illustrating an electronic device 101 in a network environment 100 according to an embodiment.

Referring to FIG. 1, an electronic device 101 in a network environment 100 may communicate with an electronic device 102 via a first network 198 (e.g., a short-range wireless communication network), or communicate with at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, a memory 130, an input module 150, a sound output module 155, a display module 160, an audio module 170, and a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one (e.g., the connecting terminal 178) of the components may be omitted from the electronic device 101, or one or more other components may be added in the electronic device 101. In some embodiments, some (e.g., the sensor module 176, the camera module 180, or the antenna module 197) of the components may be integrated as a single component (e.g., the display module 160).

The processor 120 may execute, for example, software (e.g., a program 140) to control at least one other component (e.g., a hardware or software component) of the electronic device 101 connected to the processor 120, and may perform various data processing or computation. According to an embodiment, as at least a part of data processing or computation, the processor 120 may store a command or data received from another component (e.g., the sensor module 176 or the communication module 190) in a volatile memory 132, process the command or the data stored in the volatile memory 132, and store resulting data in a non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with the main processor 121. For example, when the electronic device 101 includes the main processor 121 and the auxiliary processor 123, the auxiliary processor 123 may be adapted to consume less power than the main processor 121 or to be specific to a specified function. The auxiliary processor 123 may be implemented separately from the main processor 121 or as a part of the main processor 121.

The auxiliary processor 123 may control at least some of functions or states related to at least one of the components (e.g., the display module 160, the sensor module 176, or the communication module 190) of the electronic device 101, instead of the main processor 121 while the main processor 121 is in an inactive (e.g., sleep) state or along with the main processor 121 while the main processor 121 is an active state (e.g., executing an application). According to an embodiment, the auxiliary processor 123 (e.g., an ISP or a CP) may be implemented as a portion of another component (e.g., the camera module 180 or the communication module 190) that is functionally related to the auxiliary processor 123. According to an embodiment, the auxiliary processor 123 (e.g., an NPU) may include a hardware structure specified for artificial intelligence (AI) model processing. An AI model may be generated by machine learning. Such learning may be performed by, for example, the electronic device 101, in which artificial intelligence is performed, or performed via a separate server (e.g., the server 108). Learning algorithms may include, but are not limited to, for example, supervised learning, unsupervised learning, semi-supervised learning, or reinforcement learning algorithms. The AI model may include a plurality of artificial neural network layers. An artificial neural network may include, for example, a deep neural network (DNN), a convolutional neural network (CNN), a recurrent neural network (RNN), a restricted Boltzmann machine (RBM), a deep belief network (DBN), and a bidirectional recurrent deep neural network (BRDNN), a deep Q-network, or a combination of two or more thereof, but is not limited thereto. The AI model may additionally or alternatively include a software structure other than the hardware structure.

The memory 130 may store various pieces of data used by at least one component (e.g., the processor 120 or the sensor module 176) of the electronic device 101. The data may include, for example, software (e.g., the program 140) and input data or output data for a command related thereto. The memory 130 may include the volatile memory 132 or the non-volatile memory 134.

The program 140 may be stored as software in the memory 130, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output a sound signal to the outside of the electronic device 101. The sound output module 155 may include, for example, a speaker or a receiver. The speaker may be used for general purposes, such as playing multimedia or playing a recording. The receiver may be used to receive an incoming call. According to an embodiment, the receiver may be implemented separately from the speaker or as a part of the speaker.

The display module 160 may visually provide information to the outside (e.g., a user) of the electronic device 101. The display module 160 may include, for example, a display, a hologram device, or a projector and control circuitry to control a corresponding one of the display, the hologram device, and the projector. According to an embodiment, the display module 160 may include a touch sensor adapted to sense a touch, or a pressure sensor adapted to measure an intensity of a force incurred by the touch.

The audio module 170 may convert a sound into an electrical signal or vice versa. According to an embodiment, the audio module 170 may acquire the sound via the input module 150 or output the sound via the sound output module 155 or an external electronic device (e.g., the electronic device 102 such as a speaker or headphones) directly or wirelessly connected to the electronic device 101.

The sensor module 176 may detect an operational state (e.g., power or temperature) of the electronic device 101 or an environmental state (e.g., a state of a user) external to the electronic device 101, and generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., by wire) or wirelessly. According to an embodiment, the interface 177 may include, for example, a high-definition multimedia interface (HDMI), a universal serial bus (USB) interface, a secure digital (SD) card interface, or an audio signal interface.

The connecting terminal 178 may include a connector via which the electronic device 101 may be physically connected to an external electronic device (e.g., the electronic device 102). According to an embodiment, the connecting terminal 178 may include, for example, an HDMI connector, a USB connector, an SD card connector, or an audio signal connector (e.g., a headphones connector).

The haptic module 179 may convert an electric signal into a mechanical stimulus (e.g., a vibration or a movement) or an electrical stimulus which may be recognized by a user via their tactile sensation or kinesthetic sensation. According to an embodiment, the haptic module 179 may include, for example, a motor, a piezoelectric element, or an electric stimulator.

The camera module 180 may capture a still image and moving images. According to an embodiment, the camera module 180 may include one or more lenses, image sensors, ISPs, or flashes.

The power management module 188 may manage power supplied to the electronic device 101. According to an embodiment, the power management module 188 may be implemented as, for example, at least a part of a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more CPs that are operable independently from the processor 120 (e.g., an AP) and that support direct (e.g., wired) communication or wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module, or a power line communication module). A corresponding one of these communication modules may communicate with the external electronic device 104 via the first network 198 (e.g., a short-range communication network, such as Bluetooth, WiFi(wireless fidelity) direct, or IrDA(infrared data association)) or the second network 199 (e.g., a long-range communication network, such as a legacy cellular network, a 5G network, a next-generation communication network, the Internet, or a computer network (e.g., a LAN or WAN)). These various types of communication modules may be implemented as a single component (e.g., a single chip), or may be implemented as multiple components (e.g., multiple chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., a mmWave band) to achieve, for example, a high data transmission rate. The wireless communication module 192 may support various technologies for securing performance on a high-frequency band, such as, e.g., beamforming, massive multiple-input and multiple-output (MIMO), full dimensional MIMO (FD-MIMO), an array antenna, analog beam-forming, or a large-scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss Coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., an external electronic device) of the electronic device 101. According to an embodiment, the antenna module 197 may include an antenna including a radiating element including a conductive material or a conductive pattern formed in or on a substrate (e.g., PCB). According to an embodiment, the antenna module 197 may include a plurality of antennas (e.g., array antenna). In such a case, at least one antenna appropriate for a communication scheme used in a communication network, such as the first network 198 or the second network 199, may be selected by, for example, the communication module 190 from the plurality of antennas. The signal or power may be transmitted or received between the communication module 190 and the external electronic device via the at least one selected antenna. According to an embodiment, another component (e.g., RFIC(radio frequency integrated circuit)) other than the radiating element may be additionally formed as a part of the antenna module 197.

According to an embodiment, the antenna module 197 may form a mmWave antenna module. According to an embodiment, the mmWave antenna module may include a PCB, an RFIC disposed on a first surface (e.g., a bottom surface) of the PCB, or adjacent to the first surface of the PCB and capable of supporting a designated high-frequency band (e.g., a mmWave band), and a plurality of antennas (e.g., array antennas) disposed on a second surface (e.g., a top or a side surface) of the PCB, or adjacent to the second surface of the PCB and capable of transmitting or receiving signals in the designated high-frequency band.

At least some of the above-described components may be coupled mutually and communicate signals (e.g., commands or data) therebetween via an inter-peripheral communication scheme (e.g., a bus, GPIO(general purpose input and output), SPI(serial peripheral interface), or MIPI(mobile industry processor interface)).

According to an embodiment, commands or data may be transmitted or received between the electronic device 101 and the external electronic device 104 via the server 108 coupled with the second network 199. Each of the external electronic devices 102 and 104 may be a device of the same type as or a different type from the electronic device 101. According to an embodiment, all or some of operations to be executed by the electronic device 101 may be executed at one or more external electronic devices (e.g., the external electronic devices 102 and 104, and the server 108). For example, if the electronic device 101 needs to perform a function or a service automatically, or in response to a request from a user or another device, the electronic device 101, instead of, or in addition to, executing the function or the service, may request one or more external electronic devices to perform at least part of the function or the service. The one or more external electronic devices receiving the request may perform the at least part of the function or the service requested, or an additional function or an additional service related to the request, and may transfer a result of the performing to the electronic device 101. The electronic device 101 may provide the result, with or without further processing of the result, as at least part of a response to the request. To that end, cloud computing, distributed computing, mobile edge computing (MEC), or client-server computing technology may be used, for example. The electronic device 101 may provide ultra low-latency services using, e.g., distributed computing or MEC. In an embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., a smart home, a smart city, a smart car, or healthcare) based on 5G communication technology or IoT-related technology.

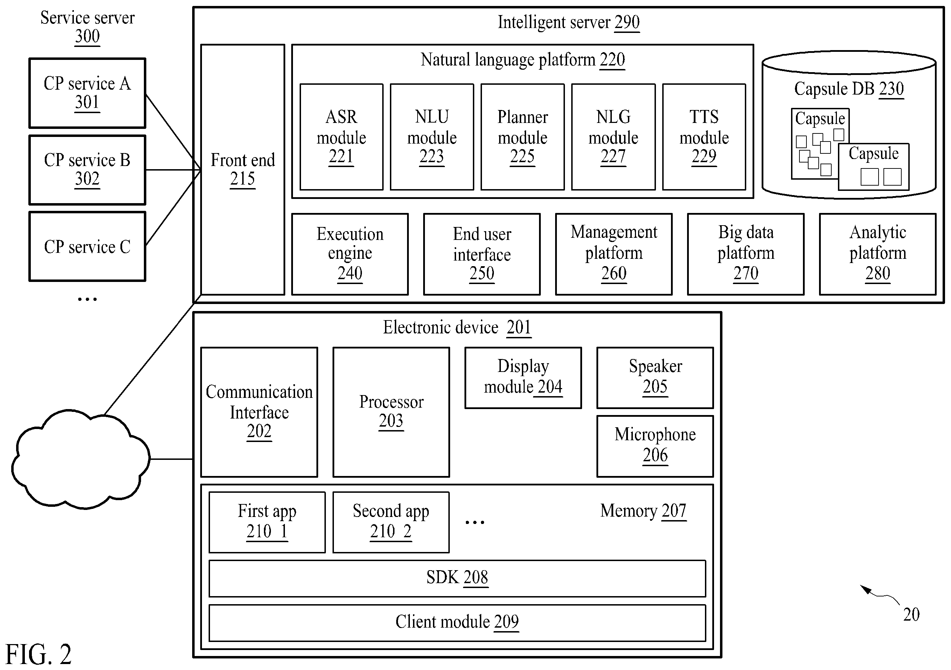

FIG. 2 is a block diagram illustrating an integrated intelligence system, according to an embodiment.

Referring to FIG. 2, an integrated intelligence system 20 according to an embodiment may include an electronic device 201 (e.g., the electronic device 101 of FIG. 1), an intelligent server 290 (e.g., the server 108 of FIG. 1), and a service server 300 (e.g., the server 108 of FIG. 1). The electronic device 201 may be a user terminal.

The electronic device 201 of one embodiment, may be a terminal device (or an electronic device) connectable to the Internet, and may be, for example, a mobile phone, a smartphone, a personal digital assistant (PDA), a notebook computer, a TV, a white home appliance, a wearable device, a head-mounted display (HMD), or a smart speaker.

According to the shown embodiment, the electronic device 201 may include a communication interface 202 (e.g., the interface 177 of FIG. 1), a microphone 206 (e.g., the input module 150 of FIG. 1), a speaker 205 (e.g., the sound output module 155 of FIG. 1), a display module 204 (e.g., the display module 160 of FIG. 1), a memory 207 (e.g., the memory 130 of FIG. 1), or a processor 203 (e.g., the processor 120 of FIG. 1). The components listed above may be operationally or electrically connected to each other.

The communication interface 202 of one embodiment, may be connected to an external device and configured to transmit and receive data to and from the external device. The microphone 206 of one embodiment may receive a sound (e.g., a user utterance) and convert the sound into an electrical signal. The speaker 205 of one embodiment may output the electrical signal as a sound (e.g., a speech).

The display module 204 of one embodiment may be configured to display an image or video. The display module 204 of one embodiment may also display a graphical user interface (GUI) of an app (or an application program) being executed. The display module 204 of one embodiment may receive a touch input through a touch sensor. For example, the display module 204 may receive a text input through a touch sensor in an on-screen keyboard area displayed in the display module 204.

The memory 207 of one embodiment may store a client module 209, a software development kit (SDK) 208, and a plurality of apps 210. The client module 209 and the SDK 208 may configure a framework (or a solution program) for performing general-purpose functions. In addition, the client module 209 or the SDK 208 may configure a framework for processing a user input (e.g., a voice input, a text input, or a touch input).

The plurality of apps 210 stored in the memory 207 of one embodiment may be programs for performing designated functions. According to an embodiment, the plurality of apps 210 may include a first app 210_1, a second app 210_2, and the like. According to an embodiment, each of the plurality of apps 210 may include a plurality of actions for performing a designated function. For example, the apps may include an alarm app, a messaging app, and/or a scheduling app. According to an embodiment, the plurality of apps 210 may be executed by the processor 203 to sequentially execute at least a portion of the plurality of actions.

The processor 203 of one embodiment may control the overall operation of the electronic device 201. For example, the processor 203 may be electrically or operatively connected to the communication interface 202, the microphone 206, the speaker 205, and the display module 204 to perform a designated operation.

The processor 203 of one embodiment may also perform the designated function by executing the program stored in the memory 207. For example, the processor 203 may execute at least one of the client module 209 or the SDK 208 to perform the following operation for processing a user input. The processor 203 may control the operation of the plurality of apps 210 through, for example, the SDK 208. The following operation which is the operation of the client module 209 or the SDK 208 may be performed by the processor 203.

The client module 209 of one embodiment may receive a user input. For example, the client module 209 may receive a voice signal corresponding to a user utterance sensed through the microphone 206. As another example, the client module 209 may receive a touch input sensed through the display module 204. As still another example, the client module 209 may receive a text input sensed through a keyboard or an on-screen keyboard. In addition, the client module 209 may receive various types of user inputs sensed through an input module included in the electronic device 201 or an input module connected to the electronic device 201. The client module 209 may transmit the received user input to the intelligent server 290. The client module 209 may transmit state information of the electronic device 201 together with the received user input to the intelligent server 290. The state information may be, for example, execution state information of an app.

The client module 209 of one embodiment may receive a result corresponding to the received user input. For example, when the intelligent server 290 is capable of calculating a result corresponding to the received user input, the client module 209 may receive the result corresponding to the received user input. The client module 209 may display the received result on the display module 204. Further, the client module 209 may output the received result in an audio signal form through the speaker 205.

The client module 209 of one embodiment may receive a plan corresponding to the received user input. The client module 209 may display results of executing a plurality of actions of an app according to the plan on the display module 204. For example, the client module 209 may sequentially display the results of executing the plurality of actions on the display module 204 and output the results in an audio signal form through the speaker 205. As another example, the electronic device 201 may display only a portion of the results of executing the plurality of actions (e.g., a result of the last action) on the display module 204 and output the portion of the results in an audio signal form through the speaker 205.

According to an embodiment, the client module 209 may receive a request for obtaining information necessary for calculating a result corresponding to the user input from the intelligent server 290. According to an embodiment, the client module 209 may transmit the necessary information to the intelligent server 290 in response to the request.

The client module 209 of one embodiment may transmit information on the results of executing the plurality of actions according to the plan to the intelligent server 290. The intelligent server 290 may confirm that the received user input has been correctly processed using the information on the results.

The client module 209 of one embodiment may include a speech recognition module. According to an embodiment, the client module 209 may recognize a voice input for performing a limited function through the speech recognition module. For example, the client module 209 may execute an intelligent app for processing a voice input to perform an organic operation through a designated input (e.g., Wake up!).

The intelligent server 290 of one embodiment may receive information related to a user voice input from the electronic device 201 through a communication network. According to an embodiment, the intelligent server 290 may change data related to the received voice input into text data. According to an embodiment, the intelligent server 290 may generate a plan for performing a task corresponding to the user voice input based on the text data.

According to an embodiment, the plan may be generated by an (AI) system. The AI system may be a rule-based system or a neural network-based system (e.g., a feedforward neural network (FNN) or a recurrent neural network (RNN)). Alternatively, the AI system may be a combination thereof or other artificial intelligence systems. According to an embodiment, the plan may be selected from a set of predefined plans or may be generated in real time in response to a user request. For example, the AI system may select at least one plan from among the predefined plans.

The intelligent server 290 of one embodiment may transmit a result according to the generated plan to the electronic device 201 or transmit the generated plan to the electronic device 201. According to an embodiment, the electronic device 201 may display the result according to the plan on the display module 204. According to an embodiment, the electronic device 201 may display a result of executing an action according to the plan on the display module 204.

The intelligent server 290 of one embodiment may include a front end 215, a natural language platform 220, a capsule database (DB) 230, an execution engine 240, an end user interface 250, a management platform 260, a big data platform 270, or an analytic platform 280.

The front end 215 of one embodiment may receive the received user input from the electronic device 201. The front end 215 may transmit a response corresponding to the user input.

According to an embodiment, the natural language platform 220 may include an automatic speech recognition (ASR) module 221, a natural language understanding (NLU) module 223, a planner module 225, a natural language generator (NLG) module 227, or a text-to-speech (TTS) module 229.

The ASR module 221 of one embodiment may convert the voice input received from the electronic device 201 into text data. The NLU module 223 may discern an intent of a user using the text data of the voice input. For example, the NLU module 223 may discern the intent of the user by performing syntactic analysis or semantic analysis on a user input in the form of text data. The NLU module 223 may discern the meaning of a word extracted from the user input using a linguistic feature (e.g., a grammatical element) of a morpheme or phrase, and determine the intent of the user by matching the discerned meaning of the word to an intent. The NLU module 223 may obtain intent information corresponding to the user utterance. The intent information may be information indicating an intention of the user determined through an analysis of the text data. The intent information may include information indicating an action or function that the user intends to execute using a device.

The planner module 225 of one embodiment may generate a plan using a parameter and the intent determined by the NLU module 223. According to an embodiment, the planner module 225 may determine a plurality of domains required to perform a task based on the determined intent. The planner module 225 may determine a plurality of actions included in each of the plurality of domains determined based on the intent. According to an embodiment, the planner module 225 may determine a parameter required to execute the determined plurality of actions or a result value output by the execution of the plurality of actions. The parameter and the result value may be defined as a concept of a designated form (or, class). Accordingly, the plan may include a plurality of actions and a plurality of concepts determined by the intent of the user. The planner module 225 may determine a relationship between the plurality of actions and the plurality of concepts stepwise (or hierarchically). For example, the planner module 225 may determine an execution order of the plurality of actions determined based on the intent of the user, based on the plurality of concepts. In other words, the planner module 225 may determine the execution order of the plurality of actions based on the parameter required for the execution of the plurality of actions and results output by the execution of the plurality of actions. Accordingly, the planner module 225 may generate a plan including connection information (e.g., ontology) between the plurality of actions and the plurality of concepts. The planner module 225 may generate the plan using information stored in the capsule DB 230 that stores a set of relationships between concepts and actions.

The NLG module 227 of one embodiment may change designated information into a text form. The information changed to the text form may be in the form of a natural language utterance. The TTS module 229 may change information in a text form into information in a speech form.

According to an embodiment, some or all of the functions of the natural language platform 220 may be implemented in the electronic device 201 as well.

The capsule DB 230 may store information on the relationship between the plurality of concepts and actions corresponding to the plurality of domains. A capsule according to an embodiment may include a plurality of action objects (or action information) and concept objects (or concept information) included in the plan. According to an embodiment, the capsule DB 230 may store a plurality of capsules in the form of a concept action network (CAN). According to an embodiment, the plurality of capsules may be stored in a function registry included in the capsule DB 230.

The capsule DB 230 may include a strategy registry that stores strategy information necessary for determining a plan corresponding to a voice input. The strategy information may include reference information for determining one plan when there are a plurality of plans corresponding to the user input. According to an embodiment, the capsule DB 230 may include a follow-up registry that stores information on follow-up actions for suggesting a follow-up action to the user in a designated situation. The follow-up action may include, for example, a follow-up utterance. According to an embodiment, the capsule DB 230 may include a layout registry that stores layout information that is information output through the electronic device 201. According to an embodiment, the capsule DB 230 may include a vocabulary registry that stores vocabulary information included in capsule information. According to an embodiment, the capsule DB 230 may include a dialog registry that stores information on a dialog (or an interaction) with the user. The capsule DB 230 may update the stored objects through a developer tool. The developer tool may include, for example, a function editor for updating an action object or a concept object. The developer tool may include a vocabulary editor for updating the vocabulary. The developer tool may include a strategy editor for generating and registering a strategy for determining a plan. The developer tool may include a dialog editor for generating a dialog with the user. The developer tool may include a follow-up editor for activating a follow-up objective and editing a follow-up utterance that provides a hint. The follow-up objective may be determined based on a current set objective, a preference of the user, or an environmental condition. In an embodiment, the capsule DB 230 may be implemented in the electronic device 201 as well.

The execution engine 240 of one embodiment may calculate a result using the generated plan. The end user interface 250 may transmit the calculated result to the electronic device 201. Accordingly, the electronic device 201 may receive the result and provide the received result to the user. The management platform 260 may manage information used by the intelligent server 290. The big data platform 270 may collect data of the user. The analytic platform 280 may manage a quality of service (QoS) of the intelligent server 290. For example, the analytic platform 280 may manage the components and processing rate (or efficiency) of the intelligent server 290.

The service server 300 of one embodiment may provide a designated service (e.g., a food order or a hotel reservation) to the electronic device 201. According to an embodiment, the service server 300 may be a server operated by a third party. The service server 300 may provide information to be used for generating a plan corresponding to the received user input to the intelligent server 290. The provided information may be stored in the capsule DB 230. In addition, the service server 300 may provide result information according to the plan to the intelligent server 290.

In the integrated intelligence system 20 described above, the electronic device 201 may provide various intelligent services to the user in response to a user input. The user input may include, for example, an input through a physical button, a touch input, or a voice input.

In an embodiment, the electronic device 201 may provide a speech recognition service through an intelligent app (or a speech recognition app) stored therein. In this case, for example, the electronic device 201 may recognize a user utterance or a voice input received through the microphone, and provide a service corresponding to the recognized voice input to the user.

In an embodiment, the electronic device 201 may perform a designated action alone or together with the intelligent server and/or a service server, based on the received voice input. For example, the electronic device 201 may execute an app corresponding to the received voice input and perform a designated action through the executed app.

In an embodiment, when the electronic device 201 provides a service together with the intelligent server 290 and/or the service server 300, the electronic device 201 may detect a user utterance using the microphone 206 and generate a signal (or voice data) corresponding to the detected user utterance. The electronic device 201 may transmit the voice data to the intelligent server 290 using the communication interface 202.

The intelligent server 290 of one embodiment may generate, as a response to the voice input received from the electronic device 201, a plan for performing a task corresponding to the voice input or a result of performing an action according to the plan. The plan may include, for example, a plurality of actions for performing a task corresponding to a voice input of a user, and a plurality of concepts related to the plurality of actions. The concepts may define parameters input to the execution of the plurality of actions or result values output by the execution of the plurality of actions. The plan may include connection information between the plurality of actions and the plurality of concepts.

The electronic device 201 may receive the response through the communication interface 202. The electronic device 201 may output a voice signal internally generated by the electronic device 201 to the outside using the speaker 205, or output an image internally generated by the electronic device 201 to the outside using the display module 204.

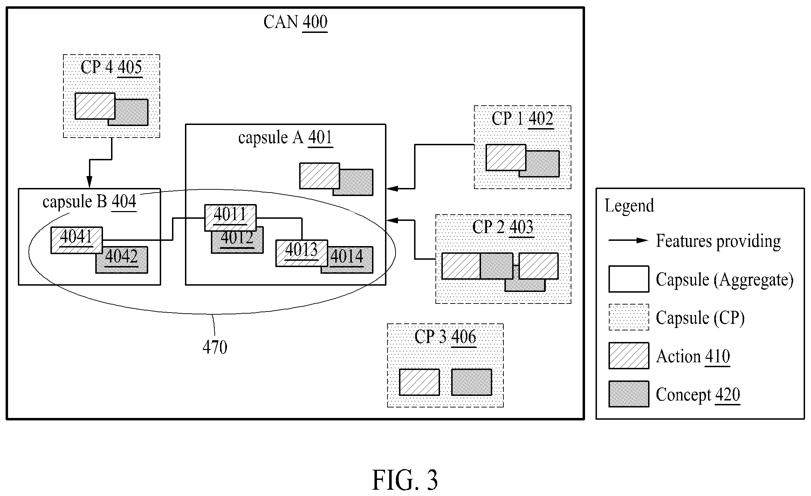

FIG. 3 is a diagram illustrating a form in which relationship information between concepts and actions is stored in a database, according to an embodiment.

A capsule DB (e.g., the capsule DB 230 of FIG. 2) of the intelligent server (e.g., the intelligent server 290 of FIG. 2) may store capsules in the form of a CAN(concept action network) 400. The capsule DB may store an action for processing a task corresponding to a voice input of a user and a parameter required for the action in the form of a CAN(concept action network).

The capsule DB may store a plurality of capsules (a capsule A 401 and a capsule B 404) respectively corresponding to a plurality of domains (e.g., applications). According to an embodiment, one capsule (e.g., the capsule A 401) may correspond to one domain (e.g., a location (geo) or an application). Further, the one capsule may correspond to at least one service provider (e.g., CP 1 402 or CP 2 403) for performing a function for a domain related to the capsule. According to an embodiment, one capsule may include at least one action 410 for performing a designated function and at least one concept 420.

Above, natural language platform (e.g., the natural language platform 220 of FIG. 2) may generate a plan for performing a task corresponding to the received speech input using the capsules stored in the capsule DB. For example, a planner module (e.g., the planner module 225 of FIG. 2) of the natural language platform may generate the plan using the capsules stored in the capsule DB. For example, a plan 470 may be generated using actions 4011 and 4013 and concepts 4012 and 4014 of the capsule A 401 and an action 4041 and a concept 4042 of the capsule B 404.

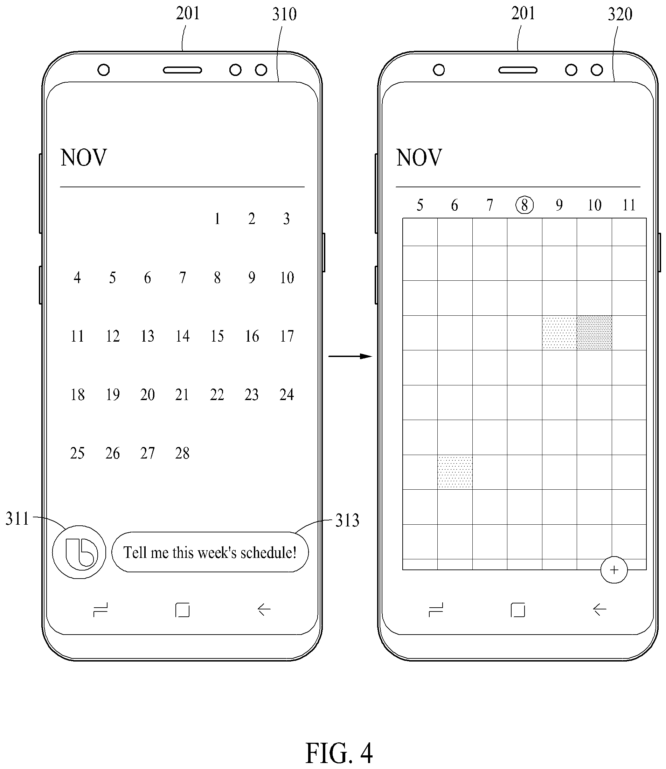

FIG. 4 is a diagram illustrating a screen of an electronic device processing a received voice input through an intelligent app, according to an embodiment.

The electronic device 201 may execute an intelligent app to process a user input through an intelligent server (e.g., the intelligent server 290 of FIG. 2).

According to an example embodiment, when a designated voice input (e.g., Wake up!) is recognized or an input through a hardware key (e.g., a dedicated hardware key) is received, the electronic device 201 may execute an intelligent app for processing the voice input, on a screen 310. The electronic device 201 may execute the intelligent app, for example, in a state in which a scheduling app is executed. According to an embodiment, the electronic device 201 may display an object (e.g., an icon 311) corresponding to the intelligent app on the display module 204 (e.g., the display module 160 of FIG. 1 or the display module 204 of FIG. 2). According to an embodiment, the electronic device 201 may receive a voice input by a user utterance. For example, the electronic device 201 may receive a voice input of "Tell me this week's schedule!". According to an embodiment, the electronic device 201 may display a user interface (UI) 313 (e.g., an input window) of the intelligent app in which text data of the received voice input is displayed on the display module 204.

According to an embodiment, the electronic device 201 may display on a screen 320 a result corresponding to the received voice input on the display module 204. For example, the electronic device 201 may receive a plan corresponding to the received user input, and display "this week's schedule" on the display module 204 according to the plan.

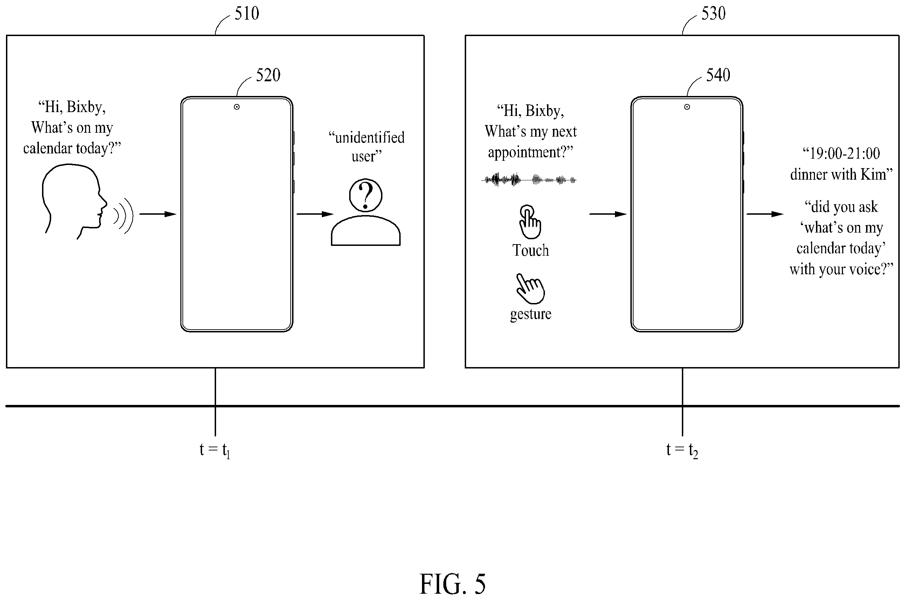

FIG. 5 is a diagram illustrating an intelligent voice system, according to an embodiment.

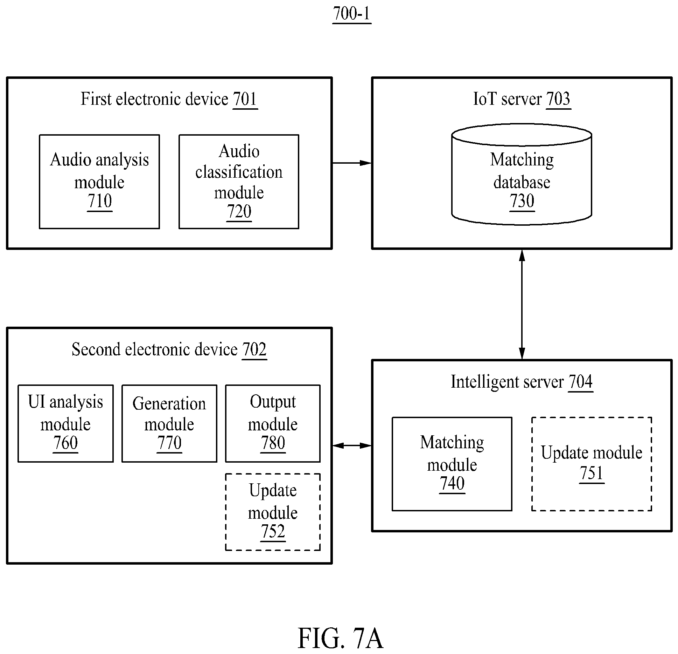

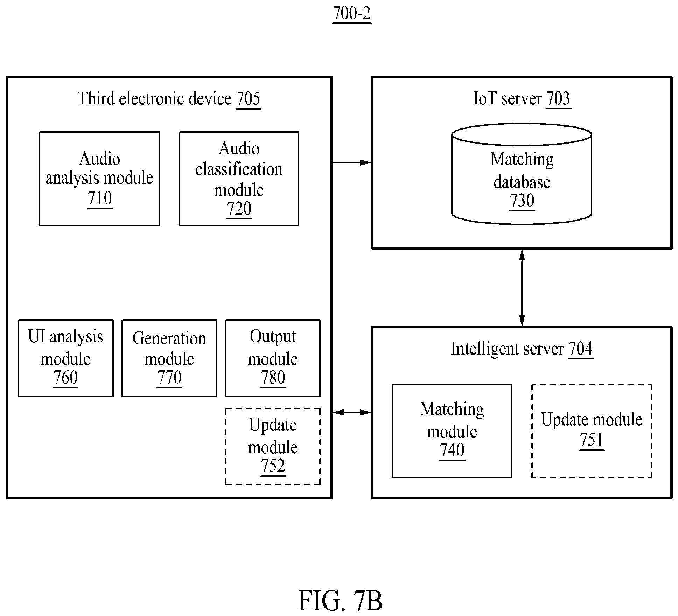

Referring to FIG. 5, according to an embodiment, an intelligent voice system (e.g., system 700-1 of FIG. 7A or system 700-2 of FIG. 7B) provided with a speaker recognition function may analyze a first event 510 related to an utterance for which speaker recognition has failed to determine whether the utterance for which speaker recognition has failed is a false-rejected utterance based on a second event 530 corresponding to an analysis result. An electronic device 540 of the second event 530 may be substantially the same as or different from an electronic device 520 of the first event 510 related to the utterance for which speaker recognition has failed. The first event 510 may be an event that occurred at t = t₁, and the second event 530 may be an event that occurred at t = t₂, where t = t₂ may be a point in time within a designated time (e.g., a valid time of the first event) from t = t₁. In a multi-device scenario in which the electronic device 540 and the electronic device 520 are different devices, the intelligent voice system may reduce performance degradation due to differences in usability (e.g., utterance distance and usage condition) for each device.

According to an embodiment, in the first event 510, the electronic device 520 may fail to recognize a speaker with respect to a user's utterance (e.g., "What's on my calendar today?"). In the second event 530, the electronic device 540 may receive a user input (e.g., "What's my next appointment?"). The user input may be in various forms such as voice, touch, gesture, and motion. When an intent of the user input corresponds to an intent of the utterance for which speaker recognition has failed, the electronic device 540 may perform an action according to the intent of the user input as well as provide information for verifying whether the utterance for which speaker recognition has failed is false-rejected. For example, the information for verifying false rejection may include a question about whether the speaker of the utterance for which speaker recognition has failed is a user of the electronic device 540. The information for verifying false rejection may be provided to the user using visual, auditory, or other functions. The electronic device 540 may receive feedback on the information for verifying false rejection from the user. Based on the feedback, the electronic device 540 may determine whether the utterance for which speaker recognition has failed is false-rejected and update a speaker model of the false-rejected utterance based on the false-rejected utterance.

According to an embodiment, the intelligent voice system may update a speaker model of a false-rejected utterance based on the false-rejected utterance, thereby strengthening the corresponding speaker model. The false-rejected utterance may be caused by an initial speaker model learned based on voice clips collected in a sound source registration process failing to completely represent the user's voice. For example, when the user uses a speaker recognition function under different conditions (e.g., different utterance distances, amount and type of ambient noise) that differ from voice samples recorded when the sound source is registered, or an utterance style changes due to internal factors (e.g., the user's health, emotional state) of the speaker, the initial speaker model may not recognize the speaker, and the user's utterance may be false-rejected.

According to an embodiment, since the intelligent voice system updates a speaker model of a false-rejected utterance based on the false-rejected utterance, limitations of re-learning an existing model by receiving additional recording clips from the user, or collecting audio recognized as the user's voice when the electronic device is used by the user may be overcome. For example, the intelligent voice system may be free from the inconvenience of the user having to intentionally perform additional recordings. In addition, since the intelligent voice system uses false-rejected utterances as learning data rather than sound sources that have already been recognized, the portions of utterances that are false-rejected may be actively improved.

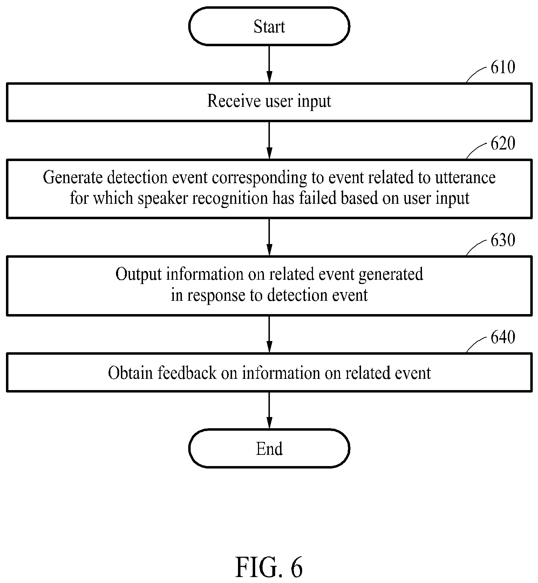

FIG. 6 is a flowchart illustrating an operation in which an electronic device obtains feedback to determine a false-rejected utterance, according to an embodiment.

In the following embodiments, operations may be performed sequentially, but embodiments are not limited in this regard and operations may not necessarily be performed sequentially. For example, the order of the operations may change, and at least two of the operations may be performed in parallel.

According to an embodiment, operations 610 to 640 of FIG. 6 may be performed by a processor (e.g., the processor 203 of FIG. 2) of an electronic device (e.g., the electronic device 201 of FIG. 2).

Operations 610 to 640 may illustrate process in which a second electronic device (e.g., the second electronic device 540 of FIG. 5) obtains feedback to determine a false-rejected utterance, according to an embodiment.

In operation 610, the second electronic device 540 may receive a user input. The user input may be in various forms. For example, the user input may be in the form of a voice, gesture, or touch. For example, the second electronic device 540 may receive a touch input for opening a calendar app.

In operation 620, the second electronic device 540 may generate a detection event corresponding to an event related to an utterance for which speaker recognition has previously failed based on the user input (e.g., the touch input for opening the calendar app). The utterance for which speaker recognition has failed may be an utterance for which intent recognition is successful. The utterance for which speaker recognition has failed may be one for which a first electronic device (e.g., the first electronic device 520 of FIG. 5) has failed in speaker recognition. In an example, the first electronic device 520 may be substantially the same as the second electronic device 540. In another example, the first electronic device 520 may be a device different from the second electronic device 540.

In an embodiment, an event related to an utterance for which speaker recognition has failed may be an event performing an action corresponding to an intent of the utterance for which speaker recognition has failed. The detection event may be an event for detecting the related event with respect to the user input. In other words, the detection event may be an event for detecting the user input performing an action corresponding to the intent of the utterance for which speaker recognition has failed. The second electronic device 540 may generate the detection event based on an occurrence time of the utterance for which speaker recognition has failed and the intent of the utterance for which speaker recognition has failed.

In an embodiment, the second electronic device 540 may generate a detection event for detecting an event (e.g., a related event) performing an action corresponding to an intent of an utterance for which speaker recognition has previously failed, by determining whether a user input (e.g., a touch input for opening a calendar app) performs the action corresponding to the intent of the utterance for which speaker recognition has previously failed. For example, when "Turn up the music volume" and "What's my first schedule for today?" are included among the utterance for which speaker recognition has previously failed, the user input (e.g., the touch input for opening the calendar app) performs an action (e.g., execution of the calendar app) corresponding to an intent (e.g., schedule search) of "What's my first schedule for today?", so the second electronic device 540 may generate the detection event.

In operation 630, the second electronic device 540 may output information on the related event generated in response to the detection event. For example, the second electronic device 540 may output a user interface including the information on the related event. The user interface may include one or more of an audio signal of the utterance for which speaker recognition has failed and a question about a speaker of the utterance for which speaker recognition has failed.

In operation 640, the second electronic device 540 may obtain feedback on the information on the related event and transmit the feedback to an intelligent server (e.g., the intelligent server 290 of FIG. 2). The feedback may be used for learning of the speaker model with respect to the utterance for which speaker recognition has failed. Based on the feedback, the intelligent server 290 may determine whether the utterance for which speaker recognition has failed is false-rejected. In an example, when the utterance for which speaker recognition has failed is false-rejected, the intelligent server 290 may update the speaker model of the utterance for which speaker recognition has failed based on the false-rejected utterance. In another example, when the utterance for which speaker recognition has failed is false-rejected, the second electronic device 540 may update the speaker model of the utterance for which speaker recognition has failed in an on-device form. That is, the second electronic device 540 may directly update the speaker model of the utterance for which speaker recognition has failed without going through the intelligent server 290, thereby updating the model in an on-device form.

FIG. 7A is a diagram illustrating an operation in which another device determines whether an utterance for which speaker recognition has failed on one device is false-rejected, according to an embodiment, and FIG. 7B is a diagram illustrating an operation in which one device determines whether an utterance for which speaker recognition has failed on the one device is false-rejected, according to an embodiment.

Referring to FIGS. 7A and 7B, according to an embodiment, the systems 700-1 and 700-2 may include an audio analysis module 710, an audio classification module 720, a matching database 730, a matching module 740, update modules 751 and 752, a UI analysis module 760, a generation module 770, and an output module 780. The audio analysis module 710 may receive an utterance and analyze an intent and a speaker of the utterance. The audio classification module 720 may classify the utterance based on a result of analyzing the intent and the speaker of the utterance.

According to an embodiment, the audio classification module 720 may classify the utterance into a plurality of groups based on whether speech is recognized and whether a speaker is recognized. Whether speech is recognized may be whether an intent of an utterance is recognized, and whether a speaker is recognized may be whether a subject of the utterance is recognized. For example, speech recognition may be performed using automatic speech recognition (ASR), natural language understanding (NLU), or other technologies for recognizing an intent of a speech by extracting context information from the speech. Speaker recognition may be performed using a technology for recognizing a subject of a speech or an object corresponding thereto (e.g., a speaker ID).

For example, the plurality of groups may include when speech recognition is successful and speaker recognition is successful (e.g., a first group), when speech recognition is successful and speaker recognition fails (e.g., a second group), when speech recognition fails and speaker recognition is successful (e.g., a third group), and when speech recognition fails and speaker recognition fails (e.g., a fourth group).

According to an embodiment, the audio classification module 720 may store an utterance for which speech recognition is successful and speaker recognition fails (e.g., the second group) in the matching database 730. The matching database 730 may include information related to utterances for which speaker recognition has failed. Table 1 shows an example of information related to utterances for which speaker recognition has failed stored in the matching database 730.

**[Table 1]**

| Entry | Intent | Description | Valid | Device | Memory |
|---|---|---|---|---|---|
| 1 | Applinks: new_calendar | add new schedule | T | 4 | 0×00 |
| 2 | Applinks: scan_schedule | scan schedule | T-t1 | 3 | 0×01 |
| 3 | Applinks: set_alarm | set schedule alarm | T-t2 | 1 | 0×02 |
| 4 | Applinks: scan_latestcall | scan latest call | T-t3 | 7 | 0×03 |

Here, the information related to the utterances may include an intent of an utterance, a valid time of an event related to an utterance for which speaker recognition has failed, and an ID and a memory address of a device in which an audio signal of an utterance is stored.

For example, entry 2 of Table 1 may represent an utterance for which an intent of an utterance for which speaker recognition has failed is analyzed as "scan schedule". The utterance may indicate that time t1 has elapsed from a time of occurrence of the utterance to the present, and a valid time of an event related to the utterance may be time remaining as much as T-t1 in the future. T may be a maximum valid time of the event related to a utterance for which speaker recognition has failed. The audio signal of the corresponding utterance may be stored in a memory of a device having a device ID of 3, and an address of the memory may be 0x01.

As another example, when the audio signal of the corresponding utterance is stored in a server (e.g., an IoT server 703), the information related to the utterances may include an intent of the utterance, a valid time of an event related to the utterance for which speaker recognition has failed, and an ID of a device that transmits the audio signal of the utterance and a memory address in which the audio signal of the utterance is stored.

According to an embodiment, the matching module 740 may be activated when a new entry is stored in the matching database 730. The matching module 740 may monitor an event related to an utterance for which speaker recognition has failed during a valid time of the corresponding event. The event related to the utterance for which speaker recognition has failed may be an event performing an action corresponding to an intent of the utterance for which speaker recognition has failed. The matching module 740 may monitor a detection event corresponding to the related event. That is, the matching module 740 may monitor whether an event for detecting a user input performing an action corresponding to the intent of the utterance for which speaker recognition has failed occurs. When there is a detection event, the matching module 740 may select a subject of the action as a speaker candidate for the utterance for which speaker recognition has failed.

For example, the matching module 740 may monitor a detection event based on an event listener. In this example, the matching module 740 may register a listener for one or more electronic devices. The listener may determine an event related to an utterance for which speaker recognition has failed as a target event. When the matching module 740 receives a detection event corresponding to the related event from one or more electronic devices, the matching module 740 may activate the generation module 770 and delete an entry corresponding to the detection event from the matching database 730 at the same time.

As another example, when a history of user input (e.g., application use) of one or more electronic devices is stored and managed on a server (e.g., the intelligent server 704), the matching module 740 may register a listener in an activity log of the server (e.g., the intelligent server 704).

According to an embodiment, the UI analysis module 760 may receive a user input. The user input may be in various forms. For example, the user input may be a voice, touch, or gesture. The UI analysis module 760 may generate a detection event based on the user input. That is, the UI analysis module 760 may generate a detection event when an action performed by a user input corresponds to an action corresponding to an intent of an utterance for which speaker recognition has failed. The UI analysis module 760 may transmit the detection event to the matching module 740.

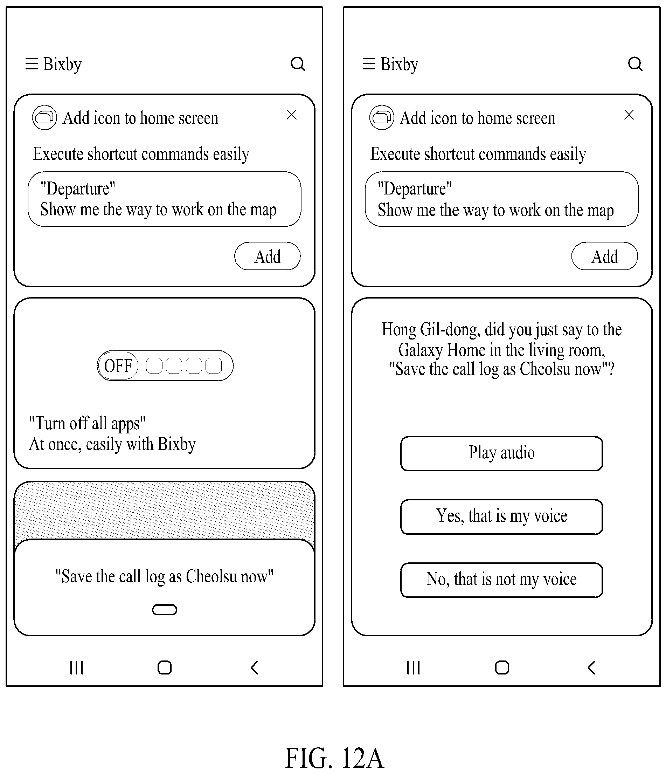

According to an embodiment, the generation module 770 may be called by the matching module 740 according to the matching module 740 receiving a detection event. The generation module 770 may generate information on the related event in response to the detection event. The generation module 770 may generate a user interface including the information on the related event in response to the detection event. The user interface may include one or more of an audio signal of an utterance for which speaker recognition has failed and a question about a speaker of the utterance for which speaker recognition has failed. An example of the user interface will be further described with reference to FIGS. 12A to 12C.

According to an embodiment, the output module 780 may output information on a related event. For example, the output module 780 may output a user interface on a display of an electronic device (e.g., a second electronic device 702 or a third electronic device 705). As another example, the output module 780 may store information on a related event in an activity log of a server (e.g., the intelligent server 704) so that a user may view an activity of the server (e.g., the intelligent server 704) when desired.

According to an embodiment, the output module 780 may obtain feedback on the information on the related event. The feedback may include at least one of whether an utterance for which speaker recognition has failed is i) the user's own voice, or ii) when it is not the user's own voice, whose utterance it is. The output module 780 may transmit the feedback to the matching module 740. Based on the feedback, the matching module 740 may determine whether the utterance for which the speaker recognition has failed is false-rejected.

According to an embodiment, the update module 751 or 752 may receive whether the utterance for which speaker recognition has failed is false-rejected, from the matching module 740. The update module 751 or 752 may learn (e.g., update) a speaker model of the utterance for which speaker recognition has failed based on whether the utterance is false-rejected. When the update module 751 or 752 determines that the utterance for which speaker recognition has failed is a false-rejected utterance, the update module 751 or 752 may use the utterance for which speaker recognition has failed as learning data for the speaker model of the utterance for which speaker recognition has failed. Accordingly, the speaker model may perform incremental learning and continual learning.

According to an embodiment, in the system 700-1, another device (e.g., the second electronic device 702) may determine whether an utterance for which speaker recognition has failed in one device (e.g., the first electronic device 701) is false-rejected. Here, the first electronic device 701 and the second electronic device 702 may share a common IoT platform. For ease of description, only two electronic devices (e.g., the first electronic device 701 and the second electronic device 702) are included in FIG. 7A, but this is merely an example, and according to embodiments, the system 700-1 may include two or more electronic devices.

According to an embodiment, the audio analysis module 710 and the audio classification module 720 may be implemented on the first electronic device 701, the matching database 730 may be implemented on the IoT server 703, the matching module 740 and the update module 751 may be implemented on the intelligent server 704, and the update module 752, the UI analysis module 760, the generation module 770, and the output module 780 may be implemented on the second electronic device 702. The update module 751 and the update module 752 may be implemented alternatively.

According to an embodiment, when the system 700-1 does not support on-device operation, the audio analysis module 710 may be implemented on the IoT server 703.

According to an embodiment, since the matching database 730 is implemented on the IoT server 703, reading/writing of the matching database 730 may be possible from public devices registered in the IoT platform or individual devices of users registered as home members. That is, the matching database 730 may be shared among the corresponding devices, and user utterances input to the individual devices may be additionally stored in or deleted from the matching database 730.

In this case, an utterance additionally stored in the matching database 730 among the user utterances input to the individual devices may be an utterance for which intent recognition is successful but speaker recognition has failed. An entry to be deleted from the matching database 730 among entries corresponding to the user utterances input to the individual devices may include an entry corresponding to an utterance that has passed a designated valid time since a time of occurrence of the utterance and an entry corresponding to an utterance for which user input and intent matching has been completed on another device within a valid time.

According to an embodiment, when the update module 752 is implemented on the second electronic device 702, the second electronic device 702 may directly update a speaker model of a false-rejected utterance based on the false-rejected utterance and share the updated speaker model with another electronic device (e.g., the first electronic device 701) sharing the IoT platform.

For ease of description, in FIG. 7A, an example in which only some of the plurality of modules 710, 720, 760, 770, 780, and 752 are implemented on the first electronic device 701 and the second electronic device 702 is described, but this is only to describe modules related to an operation of the system 700-1, and the first electronic device 701 and the second electronic device 702 may include all of the plurality of modules 710, 720, 760, 770, 780, and 752, respectively.

According to an embodiment, the system 700-2 shows an operation in which one device (e.g., the third electronic device 705) determines whether an utterance for which speaker recognition has failed in the one device (e.g., the third electronic device 705) is false-rejected. The audio analysis module 710, the audio classification module 720, the update module 752, the UI analysis module 760, the generation module 770, and the output module 780 may be implemented on the third electronic device 705, the matching database 730 may be implemented on the IoT server 703, and the matching module 740 and the update module 751 may be implemented on the intelligent server 704. The update module 751 and the update module 752 may be implemented alternatively.

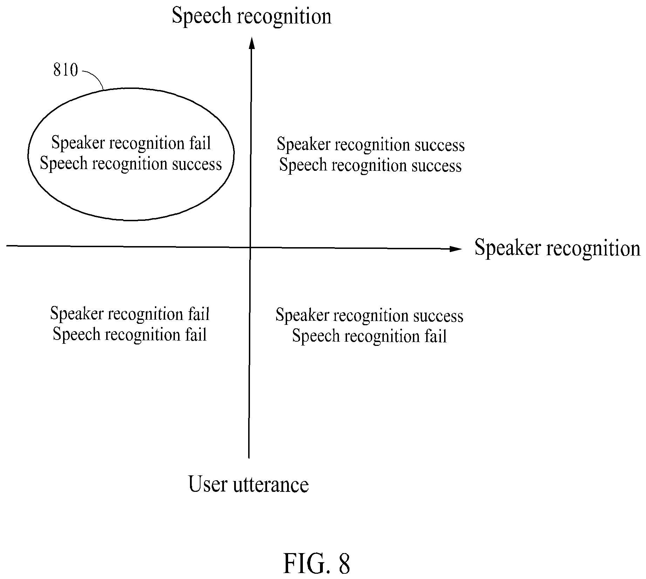

FIG. 8 is a diagram illustrating an operation in which an electronic device classifies an utterance for which speaker recognition has failed, according to an embodiment.

Referring to FIG. 8, according to an embodiment, an electronic device (e.g., the first electronic device 701 of FIG. 7A or the third electronic device 705 of FIG. 7B) may classify an utterance into a plurality of groups based on whether speech is recognized and whether a speaker is recognized. Whether speech is recognized may be whether an intent of an utterance is recognized, and whether a speaker is recognized may be whether a subject of the utterance is recognized. For example, speech recognition may be performed using ASR, NLU, or other technologies for recognizing an intent of a speech by extracting context information from the speech. Speaker recognition may be performed using a technology for recognizing a subject of a speech or an object corresponding thereto (e.g., a speaker ID and the like).

For example, the plurality of groups may include when speech recognition is successful and speaker recognition is successful (e.g., a first group), when speech recognition is successful and speaker recognition fails (e.g., a second group) 810, when speech recognition fails and speaker recognition is successful (e.g., a third group), and when speech recognition fails and speaker recognition fails (e.g., a fourth group).

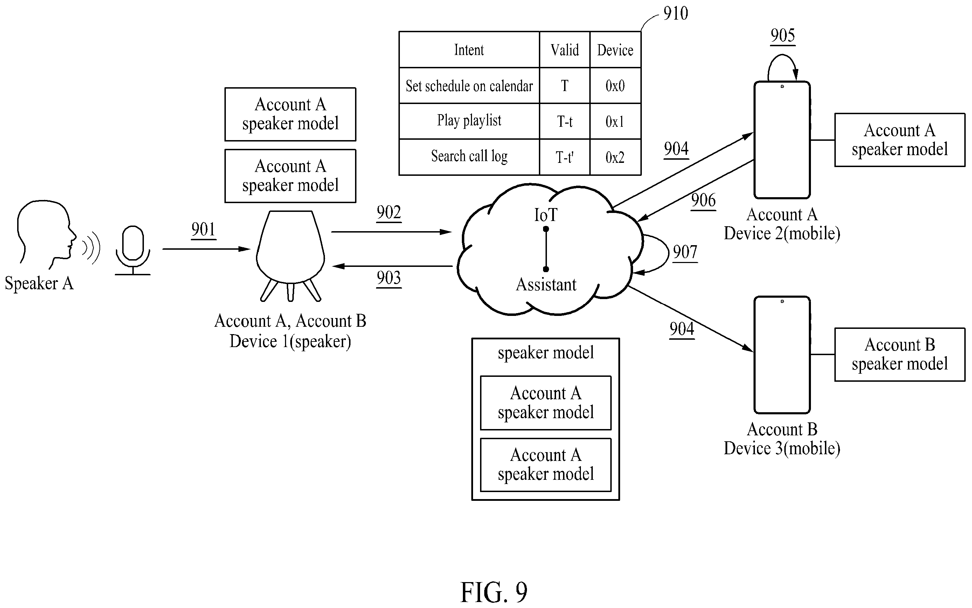

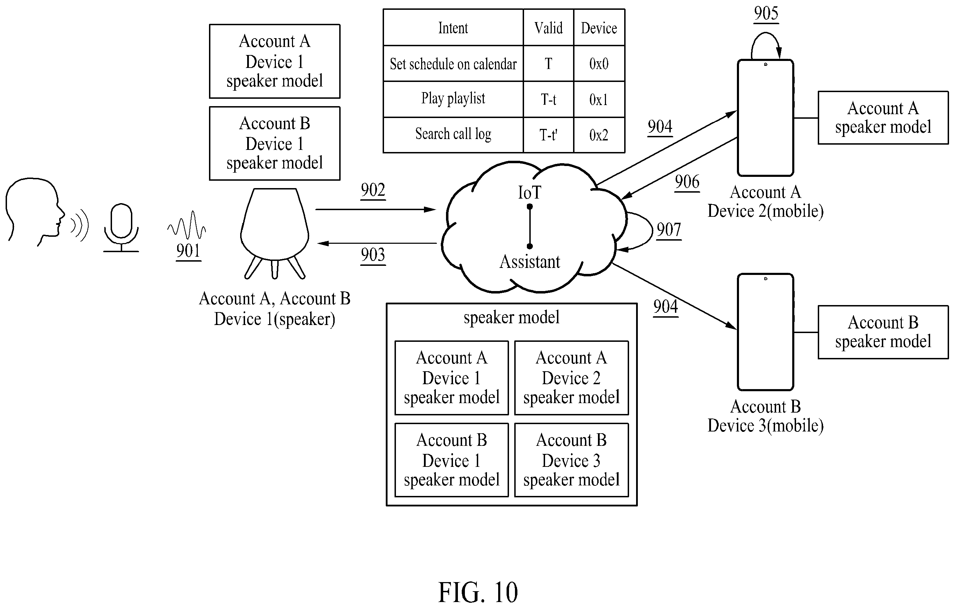

FIG. 9 is a diagram illustrating an example of an operation in which an intelligent server updates a speaker model of an utterance for which speaker recognition has failed based on a false-rejected utterance, according to an embodiment, and FIG. 10 is a diagram illustrating another example of an operation in which an intelligent server updates a speaker model of an utterance for which speaker recognition has failed based on a false-rejected utterance, according to an embodiment.

In the following embodiments, operations may be performed sequentially, but not necessarily sequentially. For example, the order of the operations may change, and at least two of the operations may be performed in parallel.

Operations 901 to 907 may illustrate an example of an operation in which an intelligent server (e.g., the intelligent server 704 of FIG. 7A) matches intents for electronic devices (e.g., device 1, device 2, and device 3) sharing a common IoT platform, according to an embodiment.

In operation 901, a speaker A may input an utterance (e.g., a voice command) "Play my playlist" through device 1 (e.g., a speaker).

In operation 902, an audio analysis module (e.g., the audio analysis module 710 of FIG. 7A) may receive the utterance and analyze an intent and speaker of the utterance. An audio classification module (e.g., the audio classification module 720 of FIG. 7A) may classify the utterance into a plurality of groups based on whether speech is recognized and whether a speaker is recognized. For example, the audio classification module 720 may classify the utterance as an utterance for which speech recognition is successful and speaker recognition fails. The audio classification module 720 may transmit a classification result to an IoT server (e.g., the IoT server 703 of FIG. 7A).

In operation 903, the IoT server 703 may transmit a response according to the classification result to device 1. For example, the response according to the classification result may include "Speech recognition is successful, but user registration is required due to speaker recognition failure". The IoT server 703 may write information (e.g., audio, intent, and the like) on an utterance for which speaker recognition has failed in a voice match fail history table 910 of a matching database (e.g., the matching database 730 of FIG. 7A).

In operation 904, the IoT server 703 may simultaneously register listeners for individual devices (e.g., device 2 and device 3) sharing the IoT platform. A target event of the listener may be an event related to an utterance for which speaker recognition has failed. For example, the target event of the listener may be an event performing an action corresponding to an intent of an utterance for which speaker recognition has failed. The target event of the listener may be activated for a valid time of up to T hours from a time of occurrence of the utterance for which speaker recognition has failed.

In operation 905, a UI analysis module (e.g., the UI analysis module 760 of FIG. 7A) of device 2 may generate a detection event according to a target event (e.g., an event of performing an action corresponding to playing a playlist) being detected by the listener for device 2. In response to the detection event, the IoT server 703 may delete an entry corresponding to the utterance for which speaker recognition has failed from the voice match fail history table 910. The UI analysis module 760 may transmit the detection event to the intelligent server (e.g., the intelligent server 704 of FIG. 7A), and the intelligent server 704 may trigger a generation module (e.g., the generation module 770 of FIG. 7A) in response to the detection event, thereby providing information on an event related to the utterance for which speaker recognition has failed to a user of device 2 through a user interface.

In operation 906, the user of device 2 may input feedback through the user interface. For example, when the user of device 2 matches a user A of device 1, the feedback may be "Play my playlist' was input 5 minutes ago". Device 2 may transmit the feedback to the intelligent server 704.

In operation 907, according to the feedback, since the user of device 2 matches the user A of device 1, the intelligent server 704 may determine that the utterance for which speaker recognition has failed is false-rejected and update a speaker model (e.g., a speaker model of account A) of the utterance for which speaker recognition has failed based on the false-rejected utterance.

According to an embodiment, a speaker model may be operated for each account. For example, one or more devices (e.g., device 1, device 2, and device 3) sharing the IoT platform of FIG. 9 may share a speaker model of account A and a speaker model of account B.

According to an embodiment, each speaker model may be operated for each account and device. For example, one or more devices (e.g., device 1, device 2, and device 3) sharing an IoT platform of FIG. 10 may share a device 1 speaker model of account A, a device 2 speaker model of account A, a device 1 speaker model of account B, and a device 3 speaker model of account B.

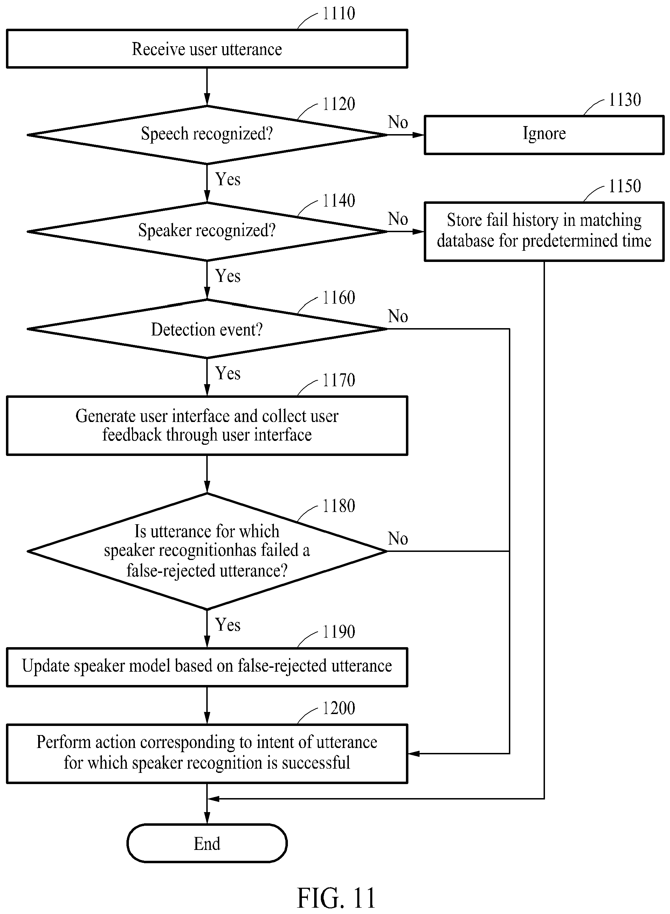

FIG. 11 is a flowchart illustrating an operation in which an intelligent server updates a speaker model of a false-rejected utterance based on the false-rejected utterance, according to an embodiment.

In the following embodiments, operations may be performed sequentially, but not necessarily sequentially. For example, the order of the operations may change, and at least two of the operations may be performed in parallel.

Operations 1110 to 1190 may illustrate an operation performed by an intelligent server (e.g., the intelligent server 704 of FIGS. 7A and 7B) according to an embodiment, wherein, when a user utterance fails speaker recognition, the intelligent server (e.g., the intelligent server 704 of FIGS. 7A and 7B) manages the user utterance as a failure history in a matching database, and when a user utterance is successful in speech recognition and speaker recognition, the intelligent server (e.g., the intelligent server 704 of FIGS. 7A and 7B) determines whether an utterance for which speaker recognition has previously failed is false-rejected and updates a speaker model of the false-rejected utterance.

In operation 1110, an electronic device (e.g., the first electronic device 701 of FIG. 7A or the third electronic device 705 of FIG. 7B) may receive an utterance (e.g., "What's on my calendar today?") of a user. The utterance of the user may correspond to a voice command.

In operation 1120, the electronic device 701 or 705 may determine whether speech is recognized in the utterance. Whether speech is recognized may be whether an intent of the utterance is recognized. The electronic device 701 or 705 may perform operation 1140 when speech recognition is successful and perform operation 1130 when speech recognition fails.

In operation 1130, the electronic device 701 or 705 may ignore the utterance when speech recognition of the utterance fails.

In operation 1140, the electronic device 701 or 705 may determine whether a speaker of the utterance is recognized. Whether a speaker is recognized may be whether a subject of the utterance is recognized. The electronic device 701 or 705 may perform operation 1160 when speaker recognition is successful and perform operation 1150 when speaker recognition fails.

In operation 1150, the electronic device 701 or 705 may output information (e.g., "Please register a user") corresponding to a user registration request to the user. The electronic device 701 or 705 may store an utterance in a matching database (e.g., the matching database 730 of FIGS. 7A and 7B). The matching database 730 may further include other utterances for which speaker recognition has failed in addition to the utterance for which speaker recognition has failed. The intelligent server (e.g., intelligent server 704 of FIGS. 7A and 7B) may generate an event related to one or more utterances for which speaker recognition has failed to be stored in the matching database 730. The related event may be an event performing an action corresponding to an intent of the utterance for which speaker recognition has failed. For example, when speaker recognition has failed for the utterance "What's on my calendar today?", the related event may be an event performing an action (e.g., execution of calendar app) corresponding to the intent (e.g., schedule search) of "What's on my calendar today?".

In operation 1160, the intelligent server 704 may determine whether a detection event is generated based on an utterance in which speech recognition and speaker recognition are successful. The intelligent server 704 may determine whether an event (e.g., a detection event) for detecting an event related to an utterance for which speaker recognition has previously failed is generated based on the utterance in which speech recognition and speaker recognition are successful. That is, the intelligent server 704 may verify whether a detection event is generated by determining whether an intent of the utterance in which speech recognition and speaker recognition are successful corresponds to an intent of the one or more utterances for which speaker recognition has failed stored in the matching database 730. The electronic device 701 or 705 may perform operation 1170 when a detection event is generated and perform operation 1200 when a detection event is not generated. In other words, the intelligent server 704 may determine whether a detection event corresponding to an intent is generated by determining whether the intent (e.g., schedule search) of the utterance "What's on my calendar today?" corresponds to an intent of the one or more utterances for which speaker recognition has failed stored in the matching database 730. For example, when the utterance "What's on my calendar today?" is successful in speech recognition and speaker recognition, and the intent (e.g., schedule search) of the utterance "What's on my calendar today?" corresponds to an intent of an utterance for which speaker recognition has previously failed, the intelligent server 704 may perform operation 1170. When the utterance "What's on my calendar today?" is successful in speech recognition and speaker recognition, and the intent (e.g., schedule search) of the utterance "What's on my calendar today?" does not correspond to an intent of an utterance for which speaker recognition has previously failed, the intelligent server 704 may perform operation 1200.

In operation 1170, when the detection event is generated, the electronic device 701, 705 may generate a user interface using a generation module activated by the intelligent server 704 in response to the detection event. The electronic device 701, 705 may obtain feedback on an utterance corresponding to the detection event among one or more utterances for which speaker recognition has failed through the user interface. The electronic device701, 705 may transmit the feedback to the intelligent server 704.

In operation 1180, the intelligent server 704 may determine whether the utterance corresponding to the detection event is a false-rejected utterance based on the feedback. The electronic device 701 or 705 may perform operation 1190 when the utterance corresponding to the detection event is a false-rejected utterance and perform operation 1200 when the utterance corresponding to the detection event is not a false-rejected utterance.

In operation 1190, the intelligent server 740 may update a speaker model corresponding to the false-rejected utterance based on the false-rejected utterance. In an embodiment, the electronic device 701 or 705 may directly update a speaker model corresponding to the false-rejected utterance based on the false-rejected utterance.

In operation 1200, the electronic device 701 or 705 may perform the action corresponding to the intent of the utterance in which speech recognition and speaker recognition are successful.

FIG. 12A is an example of a user interface for obtaining feedback, according to an embodiment.

Referring to FIG. 12A, according to an embodiment, when a detection event is generated based on a user input, an electronic device (e.g., the second electronic device 702 of FIG. 7A or the third electronic device 705 of FIG. 7B) may output information on an utterance for which speaker recognition has failed corresponding to the detection event after user input. For example, when a user requested to save a call log to the contacts on a home device through a voice command, but the command was not executed due to speaker recognition failure, the user may perform a function of an intent (e.g., saving a call log) corresponding to the utterance for which speaker recognition has failed by giving a voice command to another device (e.g., a smartphone) within a valid time of an event related to the utterance for which speaker recognition has failed. In this example, the user may be provided with a user interface regarding whether or not an audio of the utterance (e.g., "Save the call log now") for which speaker recognition has failed is the user's own voice. The user interface may include playback of an audio of the utterance (e.g., "Save the call log now") for which speaker recognition has failed and a positive/negative selection box (e.g., a display object) for the user's voice. The user may input feedback on the utterance (e.g., "Save the call log now") for which speaker recognition has failed through the user interface.

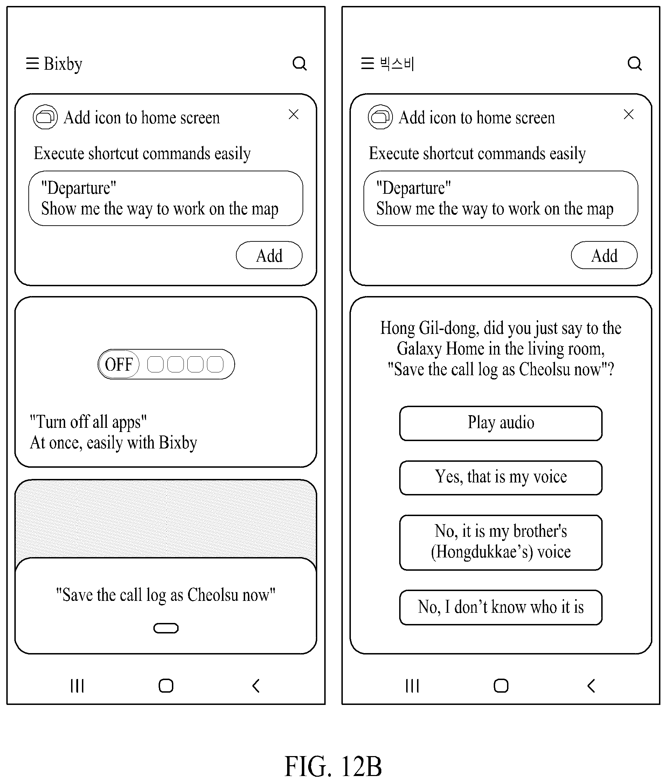

FIG. 12B is an example of a user interface for obtaining feedback, according to an embodiment.

Referring to FIG. 12B, according to an embodiment, the electronic device 702 or 705 may generate a user interface further including a selection box (e.g., "No, it is my brother's (Hongdukkae's) voice") for determining whether a speaker exists among one or more devices sharing an IoT platform when the user is not the speaker of the utterance for which speaker recognition has failed, in addition to the user interface described above with reference to FIG. 12A.

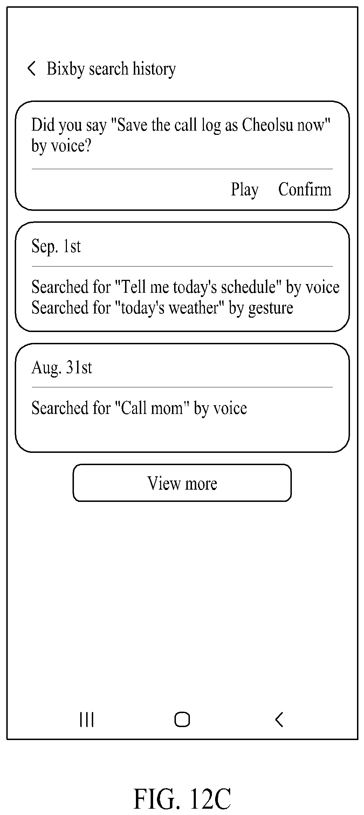

FIG. 12C is an example of a user interface for obtaining feedback, according to an embodiment.

Referring to FIG. 12C, according to an embodiment, the electronic device 702 or 705 may store information on a related event in an activity log of a server (e.g., the intelligent server 704) so that a user may view an activity of the server (e.g., the intelligent server 704) when desired. In addition, the electronic device 702 or 705 may also provide a user interface for obtaining feedback on an utterance for which speaker recognition has failed when viewing the activity log.

According to an aspect of the disclosure, an electronic device (101; 201; 520; 540; 701; 702; 705) includes a memory (130; 207) including instructions and a processor (120; 203) electrically connected to the memory (130; 207) and configured to execute the instructions. When the instructions are executed by the processor (120; 203), the processor (120; 203) may be configured to perform a plurality of operations. The plurality of operations may include receiving a user input. The plurality of operations may include generating a detection event corresponding to an event related to an utterance for which speaker recognition has failed, based on the user input. The plurality of operations may include outputting information on the related event generated in response to the detection event. The plurality of operations may include obtaining feedback on the information on the related event. The feedback may be used to learn a speaker model for the utterance for which speaker recognition has failed.

The utterance for which speaker recognition has failed may be an utterance in which intent recognition is successful.

The related event may be an event performing an action corresponding to an intent of the utterance for which speaker recognition has failed.

The detection event may be an event for detecting a user input performing an action corresponding to an intent of the utterance for which speaker recognition has failed.

The generating may include generating the detection event based on an occurrence time of the utterance for which speaker recognition has failed and an intent of the utterance for which speaker recognition has failed.

The outputting may include outputting information of the utterance for which speaker recognition has failed, when it is determined that an intent of the user input matches an intent of the utterance for which speaker recognition has failed based on the detection event.

The outputting may include outputting a user interface including the information on the related event.

The user interface may include one or more of an audio signal of the utterance for which speaker recognition has failed and a question about a speaker of the utterance for which speaker recognition has failed.

The feedback may be for determining whether the utterance in which the speaker recognition has failed is false-rejected.

The plurality of operations may further include updating the speaker model based on the utterance for which speaker recognition has failed.

The plurality of operations may further include sharing the updated speaker model to another electronic device.

The speaker model may be updated based on the utterance for which speaker recognition has failed.

According to an embodiment, a method of operating an electronic device (101; 201; 520; 540; 701; 702; 705)
may include receiving a user input. The method may include generating a detection event corresponding to an event related to an utterance for which speaker recognition has failed, based on the user input. The method may include outputting information on the related event generated in response to the detection event. The method may include obtaining feedback on the information on the related event. The feedback may be used to learn a speaker model for the utterance for which speaker recognition has failed.

According to an aspect of the disclosure, an electronic device (101; 201; 520; 540; 701; 702; 705) includes a memory (130; 207) including instructions and a processor (120; 203) electrically connected to the memory (130; 207) and configured to execute the instructions. When the instructions are executed by the processor (120; 203), the processor (120; 203) may be configured to perform a plurality of operations. The plurality of operations may include classifying an utterance for which speaker recognition has failed among received utterances. The plurality of operations may include receiving a user input within a designated time from a time of occurrence of the utterance for which speaker recognition has failed. The plurality of operations may include generating a detection event corresponding to an event related to the utterance for which speaker recognition has failed, based on the user input. The plurality of operations may include outputting information on the related event generated in response to the detection event. The plurality of operations may include obtaining feedback on the information on the related event. The feedback may be used to learn a speaker model for the utterance for which speaker recognition has failed.

The utterance for which speaker recognition has failed may be an utterance in which intent recognition is successful.

The related event may be an event performing an action corresponding to an intent of the utterance for which speaker recognition has failed.

The detection event may be an event for detecting a user input performing an action corresponding to an intent of the utterance for which speaker recognition has failed.

The outputting may include outputting information of the utterance for which speaker recognition has failed when it is determined that an intent of the user input matches an intent of the utterance for which speaker recognition has failed based on the detection event.

The outputting may include outputting a user interface including the information on the related event.

The user interface may include one or more of an audio signal of the utterance for which speaker recognition has failed and a question about a speaker of the utterance for which speaker recognition has failed.

The electronic device according to the embodiments disclosed herein may be one of various types of electronic devices. The electronic device may include, for example, a portable communication device (e.g., a smart phone), a computer device, a portable multimedia device, a portable medical device, a camera, a wearable device, or a home appliance device. According to an embodiment of the disclosure, the electronic device is not limited to those described above.

It should be understood that various embodiments of the disclosure and the terms used therein are not intended to limit the technological features set forth herein to particular embodiments and include various changes, or replacements for a corresponding embodiment. In connection with the description of the drawings, like reference numerals may be used for similar or related components. It is to be understood that a singular form of a noun corresponding to an item may include one or more of the items, unless the relevant context clearly indicates otherwise. As used herein, "A or B", "at least one of A and B", "at least one of A or B", "A, B or C", "at least one of A, B and C", and "at least one of A, B, or C," each of which may include any one of the items listed together in the corresponding one of the phrases, or all possible combinations thereof. Terms such as "1^{st}," "2^{nd}", or "first" or "second" may simply be used to distinguish the component from other components in question, and do not limit the components in other aspects (e.g., importance or order). It is to be understood that if an element (e.g., a first element) is referred to, with or without the term "operatively" or "communicatively," as "coupled with," "coupled to," "connected with," or "connected to" another element (e.g., a second element), it means that the element may be coupled with the other element directly (e.g., by wire), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an example, the module may be implemented in a form of an application-specific integrated circuit (ASIC).

Embodiments of the disclosure as set forth herein may be implemented as software (e.g., the program 140) including one or more instructions that are stored in a storage medium (e.g., an internal memory 136 or an external memory 138) that is readable by a machine (e.g., the electronic device 101). For example, a processor (e.g., the processor 120) of the machine (e.g., the electronic device 101) may invoke at least one of the one or more instructions stored in the storage medium and execute it. This allows the machine to be operated to perform at least one function according to the at least one instruction invoked. The one or more instructions may include code generated by a compiler or code executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., a compact disc read-only memory (CD-ROM)), or be distributed (e.g., downloaded or uploaded) online via an application store (e.g., PlayStore^{™}), or between two user devices (e.g., smartphones) directly. If distributed online, at least portion of the computer program product may be temporarily generated or at least temporarily stored in the machine-readable storage medium, such as memory of the manufacturer's server, a server of the application store, or a relay server.

According to embodiments, each component (e.g., a module or a program) of the above-described components may include a single entity or multiple entities, and some of the multiple entities may be separately disposed in different components. According to embodiments, one or more of the above-described components or operations may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101; 201; 520; 540; 701; 702; 705) comprising:
a memory (130; 207) storing instructions; and
a processor (120; 203) operatively connected to the memory (130; 207) and configured to execute the instructions to:
receive a user input;
generate a detection event corresponding to a related event that is related to an utterance for which speaker recognition has failed, based on the user input;
generate an information on the related event in response to the detection event;
output the generated information on the related event; and
obtain feedback on the information on the related event,
wherein the processor is **characterized in that** the feedback is used to learn a speaker model for the utterance for which the speaker recognition has failed.

2. The electronic device (101; 201; 520; 540; 701; 702; 705) of claim 1, wherein the utterance for which the speaker recognition has failed is an utterance for which intent recognition is successful.

3. The electronic device (101; 201; 520; 540; 701; 702; 705) of any one of claims 1 and 2, wherein the related event comprises performing an action corresponding to an intent of the utterance for which the speaker recognition has failed.

4. The electronic device (101; 201; 520; 540; 701; 702; 705) of any one of claims 1 to 3, wherein the detection event is for detecting a user input performing an action corresponding to an intent of the utterance for which the speaker recognition has failed.

5. The electronic device (101; 201; 520; 540; 701; 702; 705) of any one of claims 1 to 4, wherein the processor (120; 203) is further configured to execute the instructions to generate the detection event based on an occurrence time of the utterance for which the speaker recognition has failed and an intent of the utterance for which the speaker recognition has failed.

6. The electronic device (101; 201; 520; 540; 701; 702; 705) of any one of claims 1 to 5, wherein the processor (120; 203) is further configured to execute the instructions to output the information on the related event by outputting information of the utterance for which the speaker recognition has failed, in response to determining that an intent of the user input matches an intent of the utterance for which the speaker recognition has failed based on the detection event.

7. The electronic device (101; 201; 520; 540; 701; 702; 705) of any one of claims 1 to 6, wherein the processor (120; 203) is further configured to execute the instructions to output the information on the related event by outputting a user interface comprising the information on the related event.

8. The electronic device (101; 201; 520; 540; 701; 702; 705) of any one of claims 1 to 7, wherein the user interface comprises at least one of:
an audio signal of the utterance for which the speaker recognition has failed; and
a question about a speaker of the utterance for which the speaker recognition has failed.

9. The electronic device (101; 201; 520; 540; 701; 702; 705) of any one of claims 1 to 8, wherein the feedback is for determining whether the utterance for which the speaker recognition has failed is false-rejected.

10. The electronic device (101; 201; 520; 540; 701; 702; 705) of any one of claims 1 to 9, wherein the processor (120; 203) is further configured to execute the instructions to update the speaker model based on the utterance for which the speaker recognition has failed.

11. The electronic device (101; 201; 520; 540; 701; 702; 705) of claim 10, wherein the processor (120; 203) is further configured to execute the instructions to provide the updated speaker model to another electronic device (101; 201; 520; 540; 701; 702; 705).

12. The electronic device (101; 201; 520; 540; 701; 702; 705) of any one of claims 1 to 11, wherein the speaker model is updated based on the utterance for which the speaker recognition has failed.

13. The electronic device (101; 201; 520; 540; 701; 702; 705) of claim 1, wherein the processor (120; 203) is further configured to execute the instructions to:
classify an utterance for which speaker recognition has failed, among received utterances;
and
receive the user input within a designated time from a time of occurrence of the utterance for which the speaker recognition has failed.

14. The electronic device (101; 201; 520; 540; 701; 702; 705) of claim 13, wherein the utterance for which the speaker recognition has failed is an utterance in which intent recognition is successful.

15. A method of operating an electronic device (101; 201; 520; 540; 701; 702; 705), the method comprising:
receiving a user input;
generating a detection event corresponding to a related event that is related to an utterance for which speaker recognition has failed, based on the user input;
generating an information on the related event in response to the detection event;
outputting the generated information on the related event ; and
obtaining feedback on the information on the related event,
wherein the method is **characterized in that**
the feedback is used to learn a speaker model for the utterance for which the speaker recognition has failed.

## Patentansprüche

1. Elektronische Vorrichtung (101; 201; 520; 540; 701; 702; 705), die Folgendes umfasst:
einen Speicher (130; 207), der Anweisungen speichert; und
einen Prozessor (120; 203), der mit dem Speicher (130; 207) wirkverbunden ist und so konfiguriert ist, dass er die Anweisungen zu Folgendem ausführt:
Empfangen einer Benutzereingabe;
Erzeugen eines Erkennungsereignisses, das einem zugehörigen Ereignis entspricht, das mit einer Äußerung zusammenhängt, für die die Sprechererkennung fehlgeschlagen ist, basierend auf der Benutzereingabe;
Erzeugen von Informationen über das zugehörige Ereignis als Reaktion auf das Erkennungsereignis;
Ausgeben der erzeugten Informationen über das zugehörige Ereignis; und
Erhalten von Feedback zu den Informationen über das zugehörige Ereignis,
wobei der Prozessor **dadurch gekennzeichnet ist, dass**
das Feedback verwendet wird, um ein Sprechermodell für die Äußerung zu erlernen, für die die Sprechererkennung fehlgeschlagen ist.

2. Elektronische Vorrichtung (101; 201; 520; 540; 701; 702; 705) nach Anspruch 1,
wobei die Äußerung, für die die Sprechererkennung fehlgeschlagen ist, eine Äußerung ist, für die die Absichtserkennung erfolgreich ist.

3. Elektronische Vorrichtung (101; 201; 520; 540; 701; 702; 705) nach einem der Ansprüche 1 und 2, wobei das zugehörige Ereignis das Ausführen einer Handlung umfasst, die einer Absicht der Äußerung entspricht, für die die Sprechererkennung fehlgeschlagen ist.

4. Elektronische Vorrichtung (101; 201; 520; 540; 701; 702; 705) nach einem der Ansprüche 1 bis 3, wobei das Erkennungsereignis dazu dient, eine Benutzereingabe zu erkennen, die eine Handlung ausführt, die einer Absicht der Äußerung entspricht, für die die Sprechererkennung fehlgeschlagen ist.

5. Elektronische Vorrichtung (101; 201; 520; 540; 701; 702; 705) nach einem der Ansprüche 1 bis 4, wobei der Prozessor (120; 203) ferner so konfiguriert ist, dass er die Anweisungen zum Erzeugen des Erkennungsereignisses basierend auf einem Ereigniszeitpunkt der Äußerung, für die die Sprechererkennung fehlgeschlagen ist, und einer Absicht der Äußerung, für die die Sprechererkennung fehlgeschlagen ist, ausführt.

6. Elektronische Vorrichtung (101; 201; 520; 540; 701; 702; 705) nach einem der Ansprüche 1 bis 5, wobei der Prozessor (120; 203) ferner so konfiguriert ist, dass er die Anweisungen zum Ausgeben der Informationen über das zugehörige Ereignis ausführt, indem er Informationen über die Äußerung ausgibt, für die die Sprechererkennung fehlgeschlagen ist, als Reaktion auf das Bestimmen, dass eine Absicht der Benutzereingabe mit einer Absicht der Äußerung übereinstimmt, für die die Sprechererkennung fehlgeschlagen ist, basierend auf dem Erkennungsereignis.

7. Elektronische Vorrichtung (101; 201; 520; 540; 701; 702; 705) nach einem der Ansprüche 1 bis 6, wobei der Prozessor (120; 203) ferner so konfiguriert ist, dass er die Anweisungen zum Ausgeben der Informationen über das zugehörige Ereignis ausführt, indem er eine Benutzeroberfläche ausgibt, die die Informationen über das zugehörige Ereignis umfasst.

8. Elektronische Vorrichtung (101; 201; 520; 540; 701; 702; 705) nach einem der Ansprüche 1 bis 7, wobei die Benutzeroberfläche mindestens eines von Folgendem umfasst:
ein Audiosignal der Äußerung, für die die Sprechererkennung fehlgeschlagen ist; und
eine Frage zu einem Sprecher der Äußerung, für die die Sprechererkennung fehlgeschlagen ist.

9. Elektronische Vorrichtung (101; 201; 520; 540; 701; 702; 705) nach einem der Ansprüche 1 bis 8, wobei das Feedback dazu dient, zu bestimmen, ob die Äußerung, für die die Sprechererkennung fehlgeschlagen ist, fälschlicherweise abgelehnt wurde.

10. Elektronische Vorrichtung (101; 201; 520; 540; 701; 702; 705) nach einem der Ansprüche 1 bis 9, wobei der Prozessor (120; 203) ferner so konfiguriert ist, dass er die Anweisungen zum Aktualisieren des Sprechermodells basierend auf der Äußerung ausführt, für die die Sprechererkennung fehlgeschlagen ist.

11. Elektronische Vorrichtung (101; 201; 520; 540; 701; 702; 705) nach Anspruch 10, wobei der Prozessor (120; 203) ferner so konfiguriert ist, dass er die Anweisungen zum Bereitstellen des aktualisierten Sprechermodells an eine andere elektronische Vorrichtung (101; 201; 520; 540; 701; 702; 705) ausführt.

12. Elektronische Vorrichtung (101; 201; 520; 540; 701; 702; 705) nach einem der Ansprüche 1 bis 11, wobei das Sprechermodell basierend auf der Äußerung aktualisiert wird, für die die Sprechererkennung fehlgeschlagen ist.

13. Elektronische Vorrichtung (101; 201; 520; 540; 701; 702; 705) nach Anspruch 1,
wobei der Prozessor (120; 203) ferner so konfiguriert ist, dass er die Anweisungen zu Folgendem ausführt:
Klassifizieren einer Äußerung, für die die Sprechererkennung fehlgeschlagen ist, unter den empfangenen Äußerungen; und
Empfangen der Benutzereingabe innerhalb einer festgelegten Zeit ab dem Zeitpunkt des Auftretens der Äußerung, für die die Sprechererkennung fehlgeschlagen ist.

14. Elektronische Vorrichtung (101; 201; 520; 540; 701; 702; 705) nach Anspruch 13, wobei die Äußerung, für die die Sprechererkennung fehlgeschlagen ist, eine Äußerung ist, für die die Absichtserkennung erfolgreich ist.

15. Verfahren zum Betreiben einer elektronischen Vorrichtung (101; 201; 520; 540; 701; 702; 705), wobei das Verfahren Folgendes umfasst:
Empfangen einer Benutzereingabe;
Erzeugen eines Erkennungsereignisses, das einem zugehörigen Ereignis entspricht, das mit einer Äußerung zusammenhängt, für die die Sprechererkennung fehlgeschlagen ist, basierend auf der Benutzereingabe;
Erzeugen von Informationen über das zugehörige Ereignis als Reaktion auf das Erkennungsereignis;
Ausgeben der erzeugten Informationen über das zugehörige Ereignis; und
Erhalten von Feedback zu den Informationen über das zugehörige Ereignis,
wobei das Verfahren **dadurch gekennzeichnet ist, dass** das Feedback verwendet wird, um ein Sprechermodell für die Äußerung zu erlernen, für die die Sprechererkennung fehlgeschlagen ist.

## Revendications

1. Dispositif électronique (101 ; 201 ; 520 ; 540 ; 701 ; 702 ; 705) comprenant :
une mémoire (130, 207) stockant des instructions ; et
un processeur (120 ; 203) connecté de manière opérationnelle à la mémoire (130 ;207) et configuré pour exécuter les instructions pour :
recevoir une entrée d'utilisateur ;
générer, en fonction de l'entrée d'utilisateur, un événement de détection correspondant à un événement connexe lié à un énoncé pour lequel la reconnaissance du locuteur a échoué;
générer une information sur l'événement connexe en réponse à l'événement de détection ;
délivrer les informations générées sur l'événement connexe ; et
obtenir une rétroaction sur les informations relatives à l'événement connexe,
où le processeur est **caractérisé en ce que**
la rétroaction est utilisée pour l'apprentissage d'un modèle de locuteur pour l'énoncé pour lequel la reconnaissance du locuteur a échoué.

2. Dispositif électronique (101 ; 201 ; 520 ; 540 ; 701 ; 702 ; 705) selon la revendication 1,
où l'énoncé pour lequel la reconnaissance du locuteur a échoué est un énoncé pour lequel la reconnaissance d'intention est réussie.

3. Dispositif électronique (101 ; 201 ; 520 ; 540 ; 701 ; 702 ; 705) de l'une quelconque des revendications 1 et 2, où l'événement connexe comprend la réalisation d'une action correspondant à une intention de l'énoncé pour lequel la reconnaissance du locuteur a échoué.

4. Dispositif électronique (101 ; 201 ; 520 ; 540 ; 701 ; 702 ; 705) de l'une quelconque des revendications 1 à 3, où l'événement de détection sert à détecter une entrée d'utilisateur réalisant une action correspondant à une intention de l'énoncé pour lequel la reconnaissance du locuteur a échoué.

5. Dispositif électronique (101 ; 201 ; 520 ; 540 ; 701 ; 702 ; 705) de l'une quelconque des revendications 1 à 4, où le processeur (120 ; 203) est en outre configuré pour exécuter les instructions pour générer l'événement de détection en fonction d'un moment d'occurrence de l'énoncé pour lequel la reconnaissance du locuteur a échoué et d'une intention de l'énoncé pour lequel la reconnaissance du locuteur a échoué.

6. Dispositif électronique (101 ; 201 ; 520 ; 540 ; 701 ; 702 ; 705) de l'une quelconque des revendications 1 à 5, où le processeur (120 ; 203) est en outre configuré pour exécuter les instructions pour délivrer les informations relatives à l'événement connexe en délivrant des informations sur l'énoncé pour lequel la reconnaissance du locuteur a échoué, en réponse à la détermination du fait qu'une intention de l'entrée d'utilisateur correspond à une intention de l'énoncé pour lequel la reconnaissance du locuteur a échoué sur la base de l'événement de détection.

7. Dispositif électronique (101 ; 201 ; 520 ; 540 ; 701 ; 702 ; 705) de l'une quelconque des revendications 1 à 6, où le processeur (120 ; 203) est en outre configuré pour exécuter les instructions pour délivrer les informations relatives à l'événement connexe en délivrant une interface utilisateur comprenant les informations relatives à l'événement connexe.

8. Dispositif électronique (101 ; 201 ; 520 ; 540 ; 701 ; 702 ; 705) de l'une quelconque des revendications 1 à 7, où l'interface utilisateur comprend au moins l'un des éléments suivants :
un signal audio de l'énoncé pour lequel la reconnaissance du locuteur a échoué ; et
une question concernant un locuteur de l'énoncé pour lequel la reconnaissance du locuteur a échoué.

9. Dispositif électronique (101 ; 201 ; 520 ; 540 ; 701 ; 702 ; 705) de l'une quelconque des revendications 1 à 8, où la rétroaction sert à déterminer si l'énoncé pour lequel la reconnaissance du locuteur a échoué a été rejeté à tort.

10. Dispositif électronique (101 ; 201 ; 520 ; 540 ; 701 ; 702 ; 705) de l'une quelconque des revendications 1 à 9, où le processeur (120 ; 203) est en outre configuré pour exécuter les instructions de mise à jour du modèle de locuteur en fonction de l'énoncé pour lequel la reconnaissance du locuteur a échoué.

11. Dispositif électronique (101 ; 201 ; 520 ; 540 ; 701 ; 702 ; 705) selon la revendication 10,
où le processeur (120 ; 203) est en outre configuré pour exécuter les instructions pour fournir le modèle de locuteur mis à jour à un autre dispositif électronique (101 ; 201 ; 520 ; 540 ; 701 ; 702 ; 705).

12. Dispositif électronique (101 ; 201 ; 520 ; 540 ; 701 ; 702 ; 705) de l'une quelconque des revendications 1 à 11, où le modèle de locuteur est mis à jour en fonction de l'énoncé pour lequel la reconnaissance du locuteur a échoué.

13. Dispositif électronique (101 ; 201 ; 520 ; 540 ; 701 ; 702 ; 705) selon la revendication 1, où le processeur (120 ; 203) est en outre configuré pour exécuter les instructions pour :
classer parmi les énoncés reçus un énoncé pour lequel la reconnaissance du locuteur a échoué ; et
recevoir l'entrée d'utilisateur dans un temps déterminé à partir d'un moment d'occurrence de l'énoncé pour lequel la reconnaissance du locuteur a échoué.

14. Dispositif électronique (101 ; 201 ; 520 ; 540 ; 701 ; 702 ; 705) selon la revendication 13, où l'énoncé pour lequel la reconnaissance du locuteur a échoué est un énoncé dans lequel la reconnaissance d'intention est réussie.

15. Procédé de fonctionnement d'un dispositif électronique (101 ; 201 ; 520 ; 540 ; 701 ; 702 ; 705), le procédé comprenant :
recevoir une entrée d'utilisateur ;
générer, en fonction de l'entrée utilisateur, un événement de détection correspondant à un événement connexe lié à un énoncé pour lequel la reconnaissance du locuteur a échoué ;
générer une information sur l'événement connexe en réponse à l'événement de détection ;
délivrer les informations générées sur l'événement connexe; et
obtenir une rétroaction sur les informations relatives à l'événement connexe,
où le procédé est **caractérisé en ce que** la rétroaction est utilisée pour l'apprentissage d'un modèle de locuteur pour l'énoncé pour lequel la reconnaissance du locuteur a échoué.
